(19) Europäisches Patentamt
European Patent Office
Office européen des brevets

(11) **EP 2 631 162 B1**

(12) **FASCICULE DE BREVET EUROPEEN**

(45) Date de publication et mention de la délivrance du brevet:
**13.08.2014 Bulletin 2014/33**

(51) Int Cl.:
**B62K 23/04** (2006.01)   **B62M 25/04** (2006.01)

(21) Numéro de dépôt: **13155209.3**

(22) Date de dépôt: **14.02.2013**

(54) **Manette de changement de vitesse sequentiel pour bicyclette**

Sequentieller Gangschaltungshebel für Fahrrad

Sequential gearshift lever for bicycle

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.02.2012 FR 1251763**

(43) Date de publication de la demande:
**28.08.2013 Bulletin 2013/35**

(73) Titulaire: **DECATHLON
59650 Villeneuve d'Ascq (FR)**

(72) Inventeurs:
• **He, Yue
59000 LILLE (FR)**

• **Lemaitre, Benoit
59000 LILLE (FR)**

(74) Mandataire: **Balesta, Pierre
Cabinet Beau de Loménie
Immeuble Eurocentre
179 Boulevard de Turin
59777 Lille (FR)**

(56) Documents cités:
**EP-A1- 0 636 539       US-A- 6 021 688
US-A1- 2003 140 725   US-A1- 2003 221 506
US-A1- 2006 053 937**

**EP 2 631 162 B1**

## Description

DOMAINE DE L'INVENTION

L'invention concerne une manette de changement de vitesse pour bicyclette ou équivalent, et plus particulièrement une manette de changement de vitesse configurée pour être montée coaxialement à une poignée d'un guidon de bicyclette ou équivalent.

ETAT DE LA TECHNIQUE ANTERIEURE

On connait une manette de changement de vitesse pour bicyclette ou équivalent, présentant un jour s'étendant selon un axe principal, ladite manette étant configurée pour être montée de manière coaxiale sur une poignée de guidon de bicyclette ou équivalent, ladite manette comprenant un élément fixe configuré pour être rendu solidaire de la poignée de guidon, une poignée rotative coaxiale à l'axe principal et mobile en rotation autour de l'axe principal, un élément d'entrainement mobile en rotation autour de l'axe principal et configuré pour entrainer l'extrémité d'un câble de commande d'un dérailleur, et des moyens de couplage configurés pour coupler en rotation la poignée rotative et l'élément d'entrainement.

Ce type de manette présente l'inconvénient que pour changer de vitesse, la course en rotation de poignée rotative est parfois importante, notamment lorsqu'on veut changer plusieurs vitesses successivement dans un même sens (i.e. pour « monter » ou « descendre » de rapport de plusieurs crans successifs). Cette course angulaire peut atteindre 70° (soixante-dix degrés d'angle) ou plus. Par ailleurs, si la manette, et plus particulièrement la poignée, présente un diamètre important, la course en rotation (i.e. azimutale) de la poignée peut être supérieure à 5 cm (cinq centimètres). Une telle course angulaire et/ou azimutale est inconfortable pour l'utilisateur, voire impossible pour les utilisateurs ayant de petites mains, tels que les enfants et les jeunes adolescents. Par ailleurs, les vitesses étant changées successivement au long de la course rotative de la poignée, la manipulation de la poignée pour atteindre une vitesse prédéterminée est souvent imprécise, de sorte que l'utilisateur n'est pas certain que sa commande sur la poignée a déplacé le dérailleur sur la vitesse désirée.

Le document US 2006/053937 décrit également une manette de changement de vitesse.

PRESENTATION DE L'INVENTION

Le but de la présente invention est de remédier aux inconvénients mentionnés ci-dessus.

L'invention atteint son but en proposant une manette de changement de vitesse pour bicyclette ou équivalent du type précité comprenant en outre des moyens de positionnement séquentiel qui coopèrent avec les moyens de couplage et avec la poignée rotative, de sorte que lorsque la poignée rotative est déplacée dans un premier sens de rotation de commande depuis une position neutre vers une première position ou dans un second sens de rotation de commande, opposé au premier sens de rotation de commande, depuis la position neutre vers une seconde position, la poignée rotative est ramenée automatiquement en position neutre par les moyens de positionnement séquentiel, l'élément d'entrainement étant déplacé d'un angle prédéterminée dans un premier sens de rotation d'entrainement depuis une première position initiale vers une première position finale lors des déplacements de la poignée rotative entre la position neutre et la première position, tandis que l'élément d'entrainement est déplacé de l'angle prédéterminée dans un second sens de rotation d'entrainement, opposé au premier sens de rotation d'entrainement, depuis une deuxième position initiale vers une deuxième position finale lors des déplacements de la poignée rotative entre la position neutre et la seconde position.

On comprend que le terme « bicyclette ou équivalent » vise bien entendu les bicyclettes et les tricycles, mais également tout type de cycle. Dans la suite, le terme « poignée » peut être utilisé pour « poignée rotative ». De même, le terme « manette » peut être utilisé pour « manette de changement de vitesse ».

On comprend que la poignée du guidon de la bicyclette ou du cycle est emmanchée dans le jour de la manette de changement de vitesse. Ainsi, l'élément fixe et la poignée rotative sont configurés pour être disposés coaxialement autour de la poignée du guidon. L'axe de révolution de la poignée rotative et de l'élément d'entrainement est sensiblement confondu avec l'axe principal.

On comprend que les déplacements de la poignée entre la position neutre et la première position comprennent la rotation de la poignée dans le premier sens de rotation de commande depuis la position neutre vers la première position et la rotation de la poignée dans le second sens de rotation de commande depuis la première position vers la position neutre. De même, les déplacements de la poignée entre la position neutre et la seconde position comprennent la rotation de la poignée dans le second sens de rotation de commande depuis la position neutre vers la seconde position et la rotation de la poignée dans le premier sens de rotation de commande depuis la seconde position vers la position neutre.

Grâce aux moyens de couplage, les déplacements de la poignée entrainent un déplacement de l'élément d'entrainement dans le premier sens de rotation d'entrainement ou dans le second sens de rotation d'entrainement. Ainsi la manipulation de la poignée permet de commander un câble de dérailleur, par exemple un câble de type Bowden®, dont une extrémité a été fixée à l'élément d'entrainement.

On comprend que les moyens de positionnement séquentiel sont disposés entre la poignée et les moyens de couplage dans la chaine de transmission des déplacements depuis la poignée vers les moyens de couplage.

Les moyens de positionnement séquentiel permettent de changer de vitesse en déplaçant la poignée entre la position neutre et la première position, par exemple pour passer d'une vitesse T à une vitesse T+1, ou en déplaçant la poignée entre la position neutre et la seconde position, par exemple pour passer d'une vitesse T à une vitesse T-1 (ou inversement).

Les moyens de positionnement séquentiel disposés entre la poignée et les moyens de couplage dans la chaine de transmission des mouvements, permet d'obtenir une course angulaire de la poignée entre la position neutre et la première position et entre la position neutre et la seconde position réduite, c'est-à-dire inférieure à 45°. Il en va de même pour la course en rotation de la poignée qui est réduite, c'est-à-dire inférieure à 3cm. Préférentiellement, les moyens de couplage et les moyens de positionnement séquentiel sont configurés de sorte que la course angulaire de la poignée entre la position neutre est inférieure à 35°, et la course angulaire de poignée entre la première position et la course angulaire entre la position neutre et la seconde position est également inférieure à 35°. Ainsi, la course angulaire et la course en rotation de la poignée sont adaptées aux personnes ayant des petites mains, comme par exemple les enfants et les jeunes adolescents.

Par ailleurs, la poignée revenant automatiquement en position neutre après chaque déplacement vers la première ou la seconde position, on s'assure que la course angulaire de la poignée est constante quelle que soit la position initiale de l'élément d'entrainement, c'est-à-dire quelle que soit la vitesse sur laquelle le dérailleur est positionné. Ainsi, on s'assure que la course angulaire de la poignée est adaptée aux personnes ayant des petites mains dans toutes les configurations d'utilisation.

De plus, chaque manipulation de la poignée entre la position neutre et la première position ou la seconde position permet de changer une seule vitesse. Ainsi, l'utilisateur sait que lorsque la poignée est revenue en position neutre après avoir manipulé la poignée, une seule vitesse a été changée. En d'autres termes, l'utilisateur sait qu'il est passé de la vitesse T à la vitesse T+1, ou de la vitesse T à la vitesse T-1. Par conséquent, la manette selon l'invention permet un changement de vitesse précis, qui ne présente aucune incertitude quant au rapport engagé après avoir manipulé la poignée rotative.

Avantageusement, les moyens de positionnement séquentiel comprennent au moins un ressort de rappel disposé entre l'élément fixe et la poignée rotative, ledit au moins un ressort de rappel permettant de ramener automatiquement la poignée rotative en position neutre.

On comprend que le ressort peut être un ressort à torsion ou un ressort à traction/compression, ou encore une paire de ressort à traction ou une paire de ressort à compression.

Avantageusement, les moyens de couplage comprennent une première roue dentée couplée en rotation avec la poignée rotative, et les moyens de positionnement séquentiel comprennent au moins un premier cliquet monté sur la poignée rotative et engageant une dent parmi des premières dents de la première roue dentée, le premier cliquet et les premières dents étant configurés pour entrainer la première roue en rotation lorsque la poignée rotative tourne dans le premier sens de rotation de commande, tandis que le premier cliquet se désengage des premières dents lorsque la poignée rotative tourne dans le second sens de rotation de commande.

Par la suite, le terme « première roue » peut être utilisé pour « première roue dentée ». On note également qu'on utilisera les termes « premier sens de rotation de commande » et « second sens de rotation de commande » pour la première roue. Préférentiellement le premier cliquet est monté en rotation sur la poignée de manière à pouvoir pivoter pour s'engager/se dégager des premières dents. Grâce au premier cliquet, la poignée entraine en rotation la première roue dans le premier sens de rotation de commande, tandis qu'elle n'entraine pas la première roue dans le second sens de rotation de commande. Ainsi, lorsque le premier cliquet coopère avec les premières dents la première roue peut tourner dans le premier sens de rotation de commande par rapport à la poignée, mais ne peut pas tourner dans le second sens de rotation de commande par rapport à la poignée.

Avantageusement, les moyens de positionnement séquentiel comprennent au moins une première came solidaire de l'élément fixe, ladite au moins une première came désengageant ledit au moins un premier cliquet des premières dents lorsque la poignée rotative est amenée de la position neutre vers la seconde position.

On comprend qu'il y a autant de premières cames que de premiers cliquets, chaque première came étant distincte d'une autre première came et chaque premier cliquet étant distinct d'un autre premier cliquet, et que chaque première came coopère avec un premier cliquet. Préférentiellement, les premières cames sont fixes (i.e. immobiles) par rapport à l'élément fixe. Cette première came permet de libérer la première roue du premier cliquet, la première roue pouvant ainsi librement de tourner dans n'importe quel sens par rapport à la poignée.

Avantageusement, les moyens de couplage comprennent une deuxième roue dentée couplée en rotation avec l'élément d'entrainement, et les moyens de positionnement séquentiel comprennent un deuxième cliquet monté sur l'élément fixe et engageant une dent parmi des deuxièmes dents de la deuxième roue dentée, le deuxième cliquet et les deuxièmes dents étant configurés pour autoriser les déplacements en rotation de la deuxième roue dentée dans le premier sens de rotation d'entrainement et pour bloquer les déplacements en rotation de la deuxième roue dentée dans le second sens de rotation d'entrainement.

Par la suite, le terme « deuxième roue » peut être utilisé pour « deuxième roue dentée ». On note également qu'on utilisera les termes « premier sens de rotation d'entrainement » et « second sens de rotation d'entrainement » pour la deuxième roue. Préférentiellement, le deuxième cliquet est monté en rotation sur l'élément fixe de manière à pouvoir pivoter pour s'engager/se dégager des deuxièmes dents. On comprend également que la deuxième roue est disposée, dans la chaine de transmission des mouvements, entre la première roue et l'élément d'entrainement. Grâce au deuxième cliquet, la deuxième roue peut tourner dans le premier sens de rotation d'entrainement, notamment lorsque la poignée est déplacée entre la position neutre et la première position, tandis que sa rotation est bloquée dans le second sens de rotation d'entrainement, par exemple pour bloquer la force de rappel exercée par le dérailleur sur le câble fixé à l'élément d'entrainement.

Avantageusement, les moyens de positionnement séquentiel comprennent une deuxième came solidaire de la poignée rotative, ladite deuxième came désengageant le deuxième cliquet des deuxièmes dents lorsque la poignée rotative est amenée de la position neutre vers la seconde position.

Préférentiellement, la deuxième came est fixe (i.e. immobile) par rapport à la poignée rotative. Cette deuxième came permet de libérer la deuxième roue du deuxième cliquet, la deuxième roue pouvant ainsi librement tourner dans n'importe quel sens par rapport à l'élément fixe.

Avantageusement, les moyens de positionnement séquentiel comprennent un troisième cliquet monté sur l'élément fixe, ledit troisième cliquet étant configuré pour engager une dent parmi des troisièmes dents de la deuxième roue dentée lorsque la poignée rotative est dans la seconde position, tandis que le troisième cliquet est désengagé des troisièmes dents lorsque la poignée rotative est dans la position neutre ou dans la première position.

On comprend que les troisièmes dents sont distinctes des deuxièmes dents. De même, le troisième cliquet est distinct du deuxième cliquet. Préférentiellement, le troisième cliquet est monté en rotation sur l'élément fixe de manière à pouvoir pivoter pour s'engager/se dégager des troisièmes dents. Lorsque le troisième cliquet est engagé entre deux troisièmes dents, la deuxième roue est bloquée en rotation dans le premier sens de rotation d'entrainement et dans le second sens de rotation d'entrainement. Ainsi, lorsque le troisième cliquet est engagé entre deux troisièmes dents, la deuxième roue peut seulement pivoter de manière à combler un jeu éventuel entre une des deux troisièmes dents entre lesquelles le deuxième cliquet est engagé, et la dent du troisième cliquet engagée entre ces deux troisièmes dents. Ainsi, lorsque la poignée rotative est dans la position neutre ou dans la première position, le troisième cliquet laisse la deuxième roue libre de tourner tandis que lorsque la poignée est dans la seconde position le troisième cliquet bloque la deuxième roue en rotation.

Avantageusement, les moyens de positionnement séquentiel comprennent une troisième came solidaire de la poignée rotative, ladite troisième came engageant le troisième cliquet avec une dent parmi les troisièmes dents lorsque la poignée rotative est amenée de la position neutre vers la seconde position.

Préférentiellement, la troisième came est fixe (i.e. immobile) par rapport à la poignée rotative. Cette troisième came permet d'engager le troisième cliquet avec les troisièmes dents de la deuxième roue. La deuxième came est distincte de la troisième came.

Avantageusement, la deuxième came et la troisième came sont configurées pour que le troisième cliquet engage une troisième dent avant que le deuxième cliquet ne soit désengagé des deuxièmes dents lorsque la poignée rotative est amenée de la position neutre vers la seconde position.

Ainsi, il y a toujours un cliquet parmi le deuxième cliquet et le troisième cliquet coopérant avec la deuxième roue, de sorte que la deuxième roue est toujours retenue en rotation, notamment vis-à-vis de la force de rappel exercé par le dérailleur sur le câble fixé à l'élément d'entrainement couplé à la deuxième roue.

Selon un mode de réalisation, le premier sens de rotation de commande et le premier sens de rotation d'entrainement sont orientés dans le même sens, tandis que le second sens de rotation de commande et le second sens de rotation d'entrainement sont orientés dans le même sens.

Ainsi, lorsqu'on entraine la poignée dans un sens de rotation, l'élément d'entrainement est entrainé dans le même sens de rotation.

Avantageusement, la première roue dentée est coaxiale à l'axe principal, la deuxième roue dentée est coaxiale à l'axe principal, les moyens de couplage comprenant en outre un élément intermédiaire présentant un axe de rotation parallèle à, et distinct de, l'axe principal et couplant en rotation la première roue dentée et la deuxième roue dentée, ledit élément intermédiaire comprenant une troisième roue dentée engrenant directement la première roue dentée, et une quatrième roue dentée solidaire de la troisième roue dentée, ladite quatrième roue dentée engrenant directement la deuxième roue dentée.

De tels moyens de couplages sont compacts. Ainsi les dimensions de la manette sont adaptées à des petites mains, et permettent de s'assurer que la course en rotation (i.e. azimutale) de la poignée soit réduite, c'est inférieure à 3 cm (trois centimètres).

Avantageusement, le jour est cylindrique et formé par un manchon cylindrique, la poignée rotative et l'élément d'entrainement étant montés en rotation autour dudit manchon cylindrique. Avantageusement, la première roue dentée et la deuxième roue dentée sont également montées en rotation autour du manchon cylindrique.

De tels montages permettent d'assurer que la manette reste compacte, et que donc la course en rotation de la poignée rotative est réduite.

Avantageusement, la première roue dentée comprend une première portion annulaire et une seconde portion annulaire adjacente à la première portion annulaire, et dans laquelle les premières dents sont disposées sur la périphérie de la première portion annulaire tandis que des quatrièmes dents engrenant la troisième roue dentée sont disposées sur la périphérie de la seconde portion annulaire.

Avantageusement, la deuxième roue dentée présente quatre secteurs angulaires distincts, des cinquièmes dents engrenant la quatrième roue dentée étant disposées à la périphérie d'un premier secteur angulaire, l'élément d'entrainement étant disposé à la périphérie d'un deuxième secteur angulaire, les deuxièmes dents étant disposées à la périphérie d'un troisième secteur angulaire, et les troisièmes dents étant disposées à la périphérie d'un quatrième secteur angulaire.

On comprend que les premières et quatrièmes dents sont distinctes. On comprend également que les cinquièmes, deuxièmes et troisièmes dents sont distinctes. Une telle première roue et/ ou une telle deuxième roue présente(nt) une structure compacte, ce qui réduit l'encombrement de la manette. La course en rotation de la poignée est donc réduite, ce qui rend la manette encore plus adaptée aux petites mains.

Avantageusement, les moyens de couplage forment un réducteur de déplacement de sorte que la course angulaire de l'élément d'entrainement est inférieure à la course angulaire de la poignée rotative.

Un tel réducteur de déplacement permet de multiplier l'effort appliqué sur la poignée. Ainsi, pour un même dérailleur, l'effort pour changer de vitesse au niveau de la poignée rotative est réduit. Ceci permet d'encore mieux adapter la manette aux petites mains, notamment aux enfants qui n'ont pas beaucoup de force et pour qui les manettes de l'état de la technique sont inadaptées. La combinaison des moyens de positionnement séquentiel et des moyens de couplage réducteurs de déplacement permet d'une part de réduire l'effort de commande pour contrer la force de rappel d'un dérailleur, tout en s'assurant que la course angulaire et azimutale de la poignée rotative soit adaptée aux petites mains.

BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux figures annexées, sur lesquelles :

- la figure 1 représente une bicyclette équipée d'une manette de changement de vitesse selon l'invention,
- la figure 2 représente la manette de changement de vitesse de la figure 1,
- la figure 3A représente une vue éclatée de la manette de la figure 2 en perspective,
- la figure 3B représente une vue éclatée de la manette de la figure 2, selon une autre perspective que celle de la figure 3A,
- la figure 4 représente une vue partiellement éclatée de la manette de la figure 2,
- la figure 5A représente les moyens de couplage de la manette de la figure 2, en perspective,
- la figure 5B représente les moyens de couplage de la figure 5A après rotation de la première roue,
- la figure 5C représente les positions et les directions de rotation de commande la poignée rotative et les positions et les directions de rotation d'entrainement de l'élément d'entrainement,
- la figure 6 représente une vue des moyens de couplage selon la flèche IX de la figure 4,
- la figure 7 représente une vue en coupe axiale de manette de la figure 2,
- la figure 8A représente la position relative des premières cames par rapport aux premiers cliquets lorsque la poignée est entrainée depuis la position neutre vers la première position, vue selon la flèche VIII de la figure 4
- les figures 8B à 8D représentent des vues successives de la première roue et les premiers cliquets en coupe vue selon la flèche VIII de la figure 4 lorsque la poignée est entrainée depuis la position neutre (cf. fig. 8B), vers la première position (cf. fig.8C), puis retourne dans la position neutre (cf. fig. 8D),
- la figure 9A représente la position relative des deuxième et troisième cames par rapport aux deuxième et troisième cliquets lorsque la poignée est entrainée depuis la position neutre vers la première position, vue selon la flèche IX de la figure 4,
- les figures 9B à 9D représentent des vues successives de la deuxième roue et du deuxième et troisième cliquet en coupe vue selon la flèche IX de la figure 4 lorsque la poignée est entrainée depuis la position neutre (cf. fig. 9B), vers la première position (cf. fig.9C), puis retourne dans la position neutre (cf. fig. 9D),
- la figure 10A représente la position relative des premières cames par rapport aux premiers cliquets lorsque la poignée est entrainée depuis la position neutre vers la seconde position, vue selon la flèche VIII de la figure 4,
- les figures 10B à 10F représentent des vues successives de la première roue et les premiers cliquets en coupe vue selon la flèche VIII de la figure 4 lorsque la poignée est entrainée depuis la position neutre (cf. fig. 10B) vers la seconde position (cf. fig.10D) en passant par une position intermédiaire (cf. fig. 10C), puis retourne dans la position neutre (cf. fig. 10F) en passant par la même position intermédiaire (cf. fig.10E),
- la figure 11A représente la position relative des deuxième et troisième cames par rapport aux deuxième et troisième cliquets lorsque la poignée est entrainée depuis la position neutre vers la seconde position, vue selon la flèche IX de la figure 4, et

- les figures 11B à 11F représentent des vues successives de la deuxième roue et du deuxième et troisième cliquet en coupe vue selon la flèche IX de la figure 4 lorsque la poignée est entrainée depuis la position neutre (cf. fig. 11B) vers la seconde position (cf. fig.11D) en passant par une position intermédiaire (cf. fig. 11C), puis retourne dans la position neutre (cf. fig. 11F) en passant par la même position intermédiaire (cf. fig.11E).

## DESCRIPTION DETAILLEE D'EXEMPLES DE REALISATION

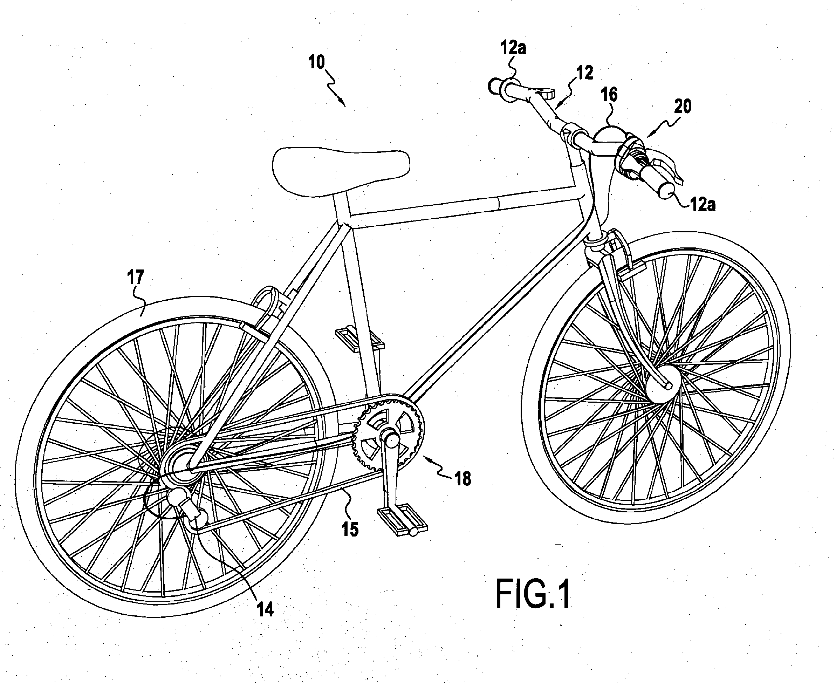

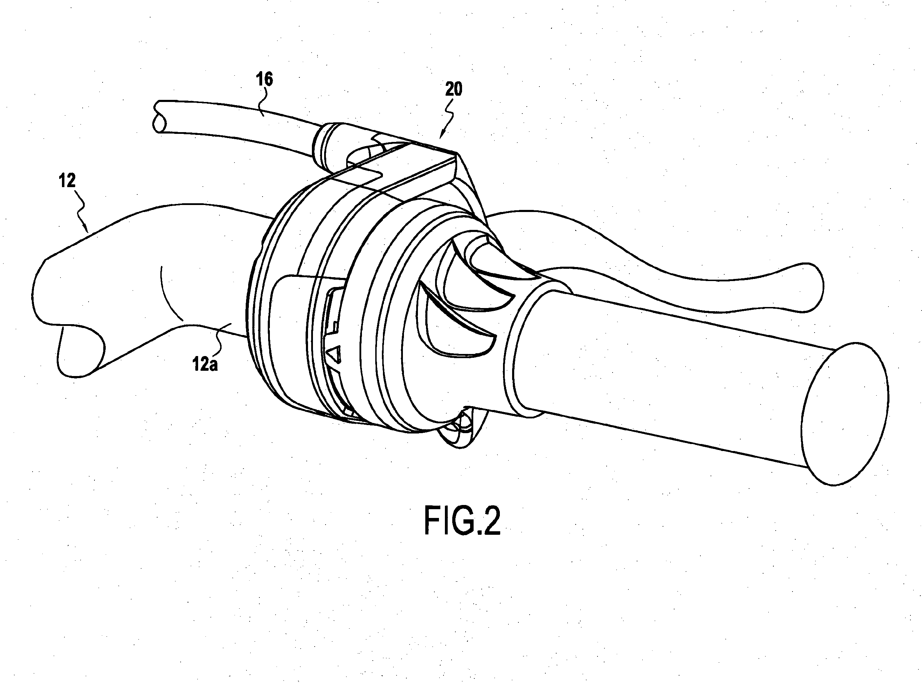

La figure 1 représente une bicyclette 10 comprenant une manette de changement de vitesse 20 selon l'invention montée coaxialement à une poignée 12a du guidon 12. La manette de dérailleur 20 est reliée à un dérailleur 14 par l'intermédiaire d'un câble Bowden® 16. Dans cet exemple, le dérailleur 14 est un dérailleur arrière (i.e. pour faire passer la chaine 15 d'un pignon à l'autre sur la roue arrière), mais bien entendu, la manette 20 peut être reliée à un dérailleur avant (i.e. pour faire passer la chaine 15 d'un plateau à l'autre sur le pédalier 18, un seul plateau étant représenté sur la figure 1). Bien entendu, une manette selon l'invention peut être disposée sur chacune des deux poignées 12a du guidon 12, une manette étant reliée à un dérailleur arrière, l'autre manette étant reliée à un dérailleur avant non représenté. La figure 2 représente la manette 20 de la figure 1 sur la poignée de guidon 12a.

## DESCRIPTION STRUCTURALE DE LA MANETTE

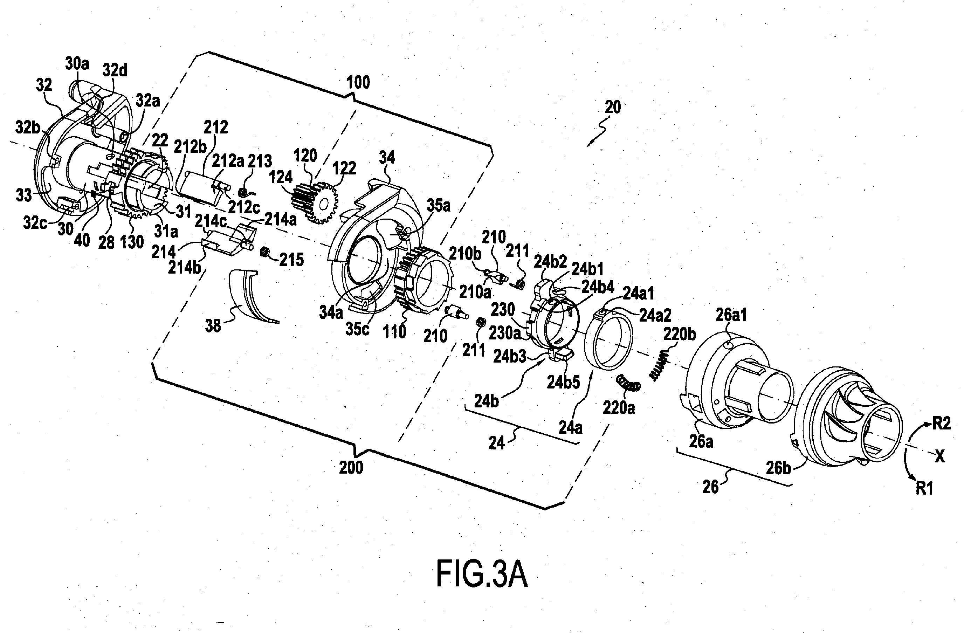

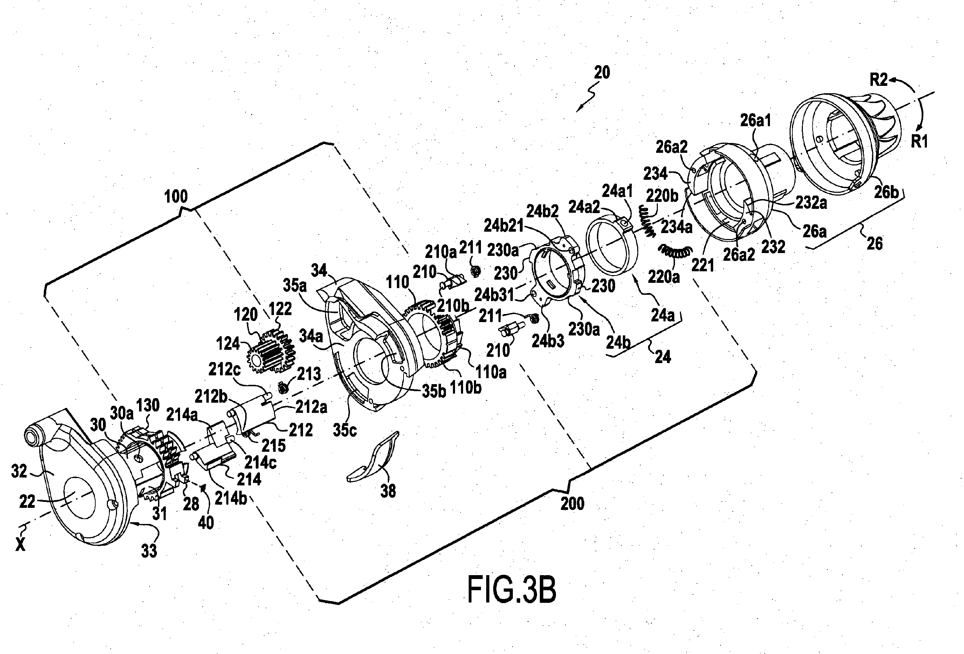

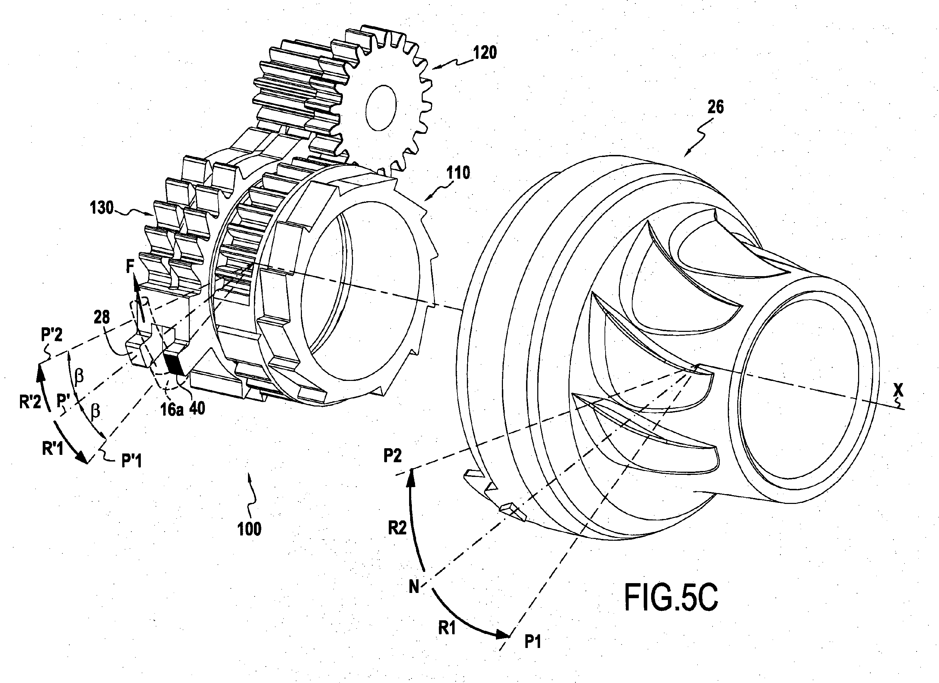

Les figures 3A et 3B représentent la manette 20 vue en éclaté en perspective. La manette 20 présente un jour cylindrique 22 s'étendant selon l'axe principal X et comprend un élément fixe 24 permettant de fixer la manette 20 à la poignée de guidon 12a, une poignée rotative 26 coaxiale à l'axe principal X et mobile en rotation autour de l'axe principal X, un élément d'entrainement 28 mobile en rotation autour de l'axe principal X auquel est accroché une extrémité 16a du câble 16 (cf. fig. 5C), des moyens de couplage 100 couplant en rotation la poignée rotative 26 et l'élément d'entrainement 28, et des moyens de positionnement séquentiel 200 coopérant avec les moyens de couplage 100 et la poignée rotative 26.

Le jour cylindrique 22 est formé dans un manchon cylindrique 30. L'axe principal X du jour 22 est confondu avec l'axe du manchon 30. Le manchon 30 est solidaire du demi-carter extérieur 32. Le manchon 30 présente des languettes 31 s'étendant axialement (i.e. parallèlement à l'axe principal X), l'extrémité distale des languettes 31 présentant un relief 31a. La poignée 26, et plus particulièrement l'élément de poignée 26a, est emmanchée autour du manchon 30, et coopère par clipsage avec les languettes 31 et les reliefs 31a selon la direction axiale X.

Dans cet exemple, la poignée rotative 26 comprend un élément de poignée 26a et un habillage de poignée (ou en anglais « grip ») 26b. Bien entendu, selon une variante, la poignée rotative ne comprend qu'un élément de poignée.

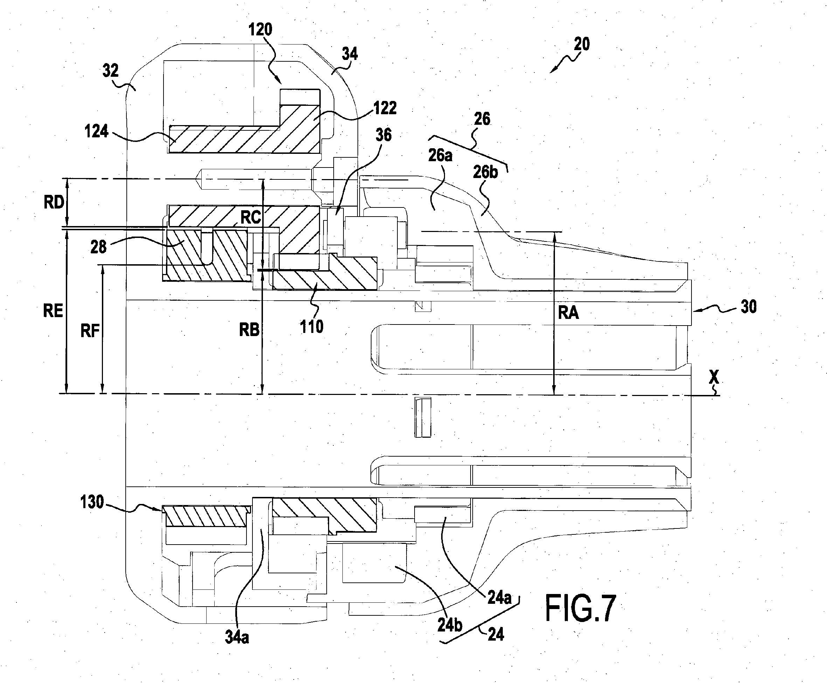

L'élément fixe 24 comprend une première bague 24a et une deuxième bague 24b. Ces première et deuxième bagues 24a et 24b sont emmanchées autour du manchon 30 tandis que la poignée 26 est emmanchée sur le manchon 30 autour des bagues 24a et 24b, comme cela est visible sur la figure 7. La première bague 24a est en métal, préférentiellement en aluminium. La première bague 24a est emmanchée autour de la deuxième bague 24b. La première bague 24a présente un trou taraudé 24a1 recevant une vis de fixation non représentée qui coopère avec la poignée 12a du guidon 12 pour fixer la manette 20 au guidon 12. Ce trou taraudé 24a1 est formé radialement dans une saillie radiale 24a2 de la première bague 24a. On comprend que la direction radiale est une direction perpendiculaire à l'axe principal X, ou direction axiale X. La deuxième bague 24b présente un trou 24b1, l'élément de poignée 26a présente un trou 26a1 et le manchon 30 présente un trou 30a, ces trous étant destinés à recevoir la vis. Le trou 26a1 permet également de recevoir l'extrémité d'un tournevis pour visser/dévisser la vis afin de fixer/retirer la manette 20 du guidon 12.

Les trous de fixation 26a1, 24a1, 24b1 et 30a sont ménagés sensiblement au milieu de la manette 20 selon la direction axiale. Ceci permet de réduire l'encombrement axial de la manette 20 et/ou de libérer de la place pour le mécanisme de la manette 20, notamment pour les moyens de couplage 100 et les moyens de positionnement séquentiel 200.

La deuxième bague 24b présente une première saillie radiale 24b2 et une deuxième saillie radiale 24b3 diamétralement opposées, pour monter un deuxième cliquet 212 (sur la première saillie 24b2) et un troisième cliquet 214 (sur la deuxième saillie 24b3) décrits ultérieurement sur l'élément fixe 24. La première saillie 24b2 présente deux ergots axiaux 24b4 qui coopèrent chacun azimutalement avec la saillie radiale 24a2 de la première bague 24a afin de bloquer les mouvements de rotation d'une bague par rapport à l'autre. La deuxième saillie 24b3 présente une saillie axiale 24b5 dont la fonction sera décrite ultérieurement. En outre la deuxième bague 24b présente deux premières cames 230 diamétralement opposées, chacune coopérant avec un premier cliquet 210 décrit ultérieurement. Les saillies 24b2 et 24b3 sont respectivement décalées d'environ 90° (quatre-vingt-dix degrés d'angle) par rapport aux premières cames 230.

D'une manière générale, on comprend que des éléments disposés diamétralement opposés peuvent selon des variantes être diamétralement opposés à plus ou moins 20° (vingt degrés d'angle).

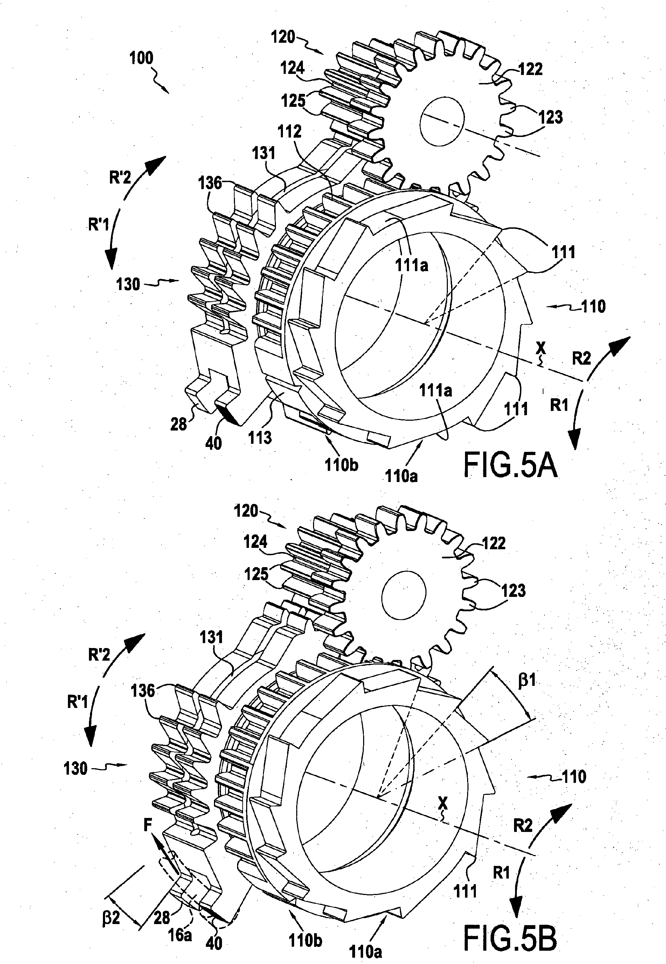

Les moyens de couplage 100 comprennent une première roue dentée 110, un élément intermédiaire 120, et une deuxième roue dentée 130. La première roue 110 et la deuxième roue 130 sont emmanchées et coopèrent en rotation autour du manchon 30, et sont coaxiales à l'axe X. L'élément d'entrainement 120 est monté en rotation sur l'arbre 32a du demi-carter extérieur 32. La figure 5A représente les moyens de couplage 100 avec la première roue 110 et la deuxième roue 130 engrenées avec l'élément intermédiaire 120.

La première roue 110 comprend une première portion annulaire 110a et une seconde portion annulaire 110b adjacente selon la direction axiale X à la première portion annulaire 110a.

La première portion annulaire 110a présente à sa périphérie des premières dents 111. Les premières dents 111 sont réparties en deux séries sur la périphérie de la portion annulaire 110, chaque série coopérant avec un premier cliquet 110 et étant séparée l'une de l'autre par un espacement angulaire 111a dépourvu de dents.

Les premières dents 111 coopèrent avec les deux premiers cliquets 210 solidaires de la poignée 26, et plus particulièrement solidaires de l'élément de poignée 26a. Ces premiers cliquets 210 permettent de coupler en rotation la poignée 26 avec la première roue 110 dans un premier sens de rotation R1. On comprend que la première roue 110 et la poignée 26 ne sont pas couplées en rotation dans le second sens de rotation R2 opposé au premier sens de rotation R1.

La seconde portion annulaire 110b présente à sa périphérie des quatrièmes dents 112. Ces quatrièmes dents 112 sont uniformément réparties sur une majeure partie continue de la périphérie (environ 90%) de la seconde portion annulaire 110b. La partie restante 113 de la périphérie de la portion annulaire 110b ne présente pas de dent et forme une butée en rotation, l'élément intermédiaire 120 ne pouvant pas engrener cette partie restante 113.

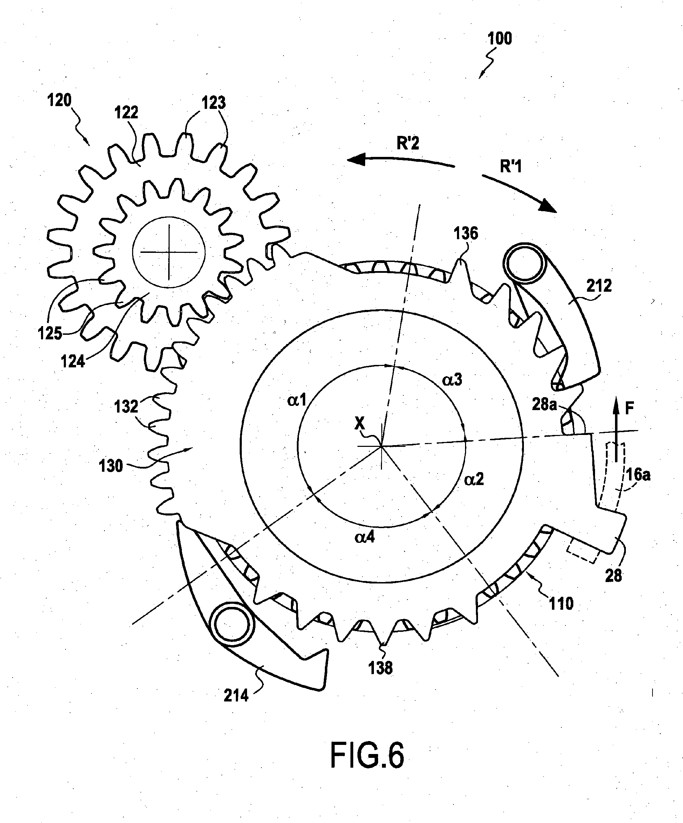

L'élément intermédiaire 120 présente une troisième roue dentée 122 engrenant directement la première roue 110, et une quatrième roue 124 engrenant directement la deuxième roue 130. La troisième roue 122 et la quatrième roue 124 sont solidaires. Ainsi l'élément intermédiaire 120 forme un arbre intermédiaire sur lequel sont formées côte à côte la troisième et la quatrième roue 122 et 124. La troisième roue 122 présente des sixièmes dents 123 engrenant les quatrièmes dents 112 de la première roue 110, et plus particulièrement de la seconde portion annulaire 110b. La quatrième roue 124 présente des septièmes dents 125 engrenant des cinquièmes dents 132 de la deuxième roue 130 (cf. fig. 6).

Bien entendu, on comprend que les premières, deuxièmes, troisièmes, quatrièmes, cinquièmes, sixièmes et septièmes dents 111, 136, 138, 112, 132, 123 et 125 sont toutes distinctes les unes des autres.

La deuxième roue dentée 130 présente quatre secteurs angulaires distincts α1, α2, α3 et α4 et adjacents deux-à-deux, visibles sur la figure 6. Sur la figure 6, considérés selon le sens trigonométrique (i.e. selon le sens R'2), les secteurs angulaires sont disposés successivement dans l'ordre suivant : α1, α4, α2 et α3. Les cinquièmes dents 132 engrenant les septièmes dents 125 de la quatrième roue dentées 124 sont disposées à la périphérie de la deuxième roue 130 sur uniquement le premier secteur angulaire α1.

L'élément d'entrainement 28 est disposé sur la périphérie de la deuxième roue 130 sur uniquement le deuxième secteur angulaire α2. On comprend donc que la deuxième roue 130 et l'élément d'entrainement 28 forment une seule et même pièce. L'élément d'entrainement 28 forme une fourche en saillie radiale depuis la périphérie de la deuxième roue 130, fourche sur laquelle est arrimée l'extrémité 16a du câble de dérailleur. L'élément d'entrainement 28 est ainsi couplé en rotation avec la deuxième roue 130 en étant solidaire de cette dernière. Ainsi, l'élément d'entrainement 28 est monté en rotation autour du manchon 30 via la deuxième roue 130. Comme représenté sur la figure 5A, la deuxième roue 130 présente à sa périphérie une rainure azimutale 131 prévue pour recevoir le câble du dérailleur lors des mouvements rotatifs de la deuxième roue 130. Cette rainure 131 s'étend sur un secteur angulaire limité s'étendant sur le troisième et le premier secteur angulaire α3 et α1 depuis l'élément d'entrainement 28, et sépare en deux (selon la direction axiale) les deuxièmes et quatrièmes dents 136 et 132.

Des deuxièmes dents 136 sont disposées sur la périphérie de la deuxième roue 130 sur uniquement le troisième secteur angulaire α3, tandis que des troisièmes dents 138 sont disposées sur la périphérie de la deuxième roue 130 sur uniquement le quatrième secteur angulaire α4. Ces deuxièmes et troisièmes dents 136 et 138 coopèrent respectivement avec un deuxième cliquet 212 et un troisième cliquet 214 décrits ultérieurement. On comprend que le deuxième cliquet 212 peut également coopérer en appui azimutal selon la direction de rotation R'2 avec l'extrémité azimutale 28a de l'élément d'entrainement 28, délimitant la séparation entre le deuxième secteur angulaire α2 et le troisième secteur angulaire α3.

Comme représenté sur la figure 7, le rayon RB de la première roue 110 est supérieur au rayon RC de la troisième roue 122, le rayon RC de la troisième roue 122 est supérieur au rayon RD de la quatrième roue 124, le rayon RD de la quatrième roue 124 est inférieur au rayon RE de la deuxième roue 130, et le rayon RB de la première roue 110 est inférieur au rayon RE de la deuxième roue 130. Par ailleurs, le rayon RA (i.e. rayon moyen selon la direction axiale X) de la poignée 26 est supérieur au rayon RB de la première roue 110. De plus le rayon RF auquel est disposé l'élément d'entrainement 28 (i.e. rayon de l'élément d'entrainement 28) sur la deuxième roue 130 est inférieur au rayon RE où les cinquièmes dents 132 sont disposées à la périphérie de la deuxième roue 130. Dans cet exemple, RA = 20.6mm (millimètre), RB = 15.5 mm, RC = 9.8mm, RD = 4.4mm, RE=20.9mm et RF=16.8mm. Grâce à cette configuration, les moyens de couplage 100 forment un réducteur de déplacement dans lequel la course angulaire de la deuxième roue 130 est inférieure à la course angulaire de la première roue 110. Ainsi, la course angulaire de l'élément d'entrainement 28 est inférieure à la course angulaire de la poignée rotative 26.

La deuxième roue 130 est logée dans un carter comprenant les deux demi-carters 32 et 34. Le demi-carter 32 forme un demi-carter extérieur tandis que le demi-carter 34 forme un demi-carter intermédiaire. La première roue 110 est logée dans un espace 36 (cf. figure 7) ménagé entre la poignée 26, et plus particulièrement l'élément de poignée 26a, le demi-carter intermédiaire 34 et le manchon 30. Plus précisément, la première roue 110 est logée axialement entre la poignée rotative 26, et plus particulièrement l'élément de poignée 26a, et le demi-carter intermédiaire 34, et plus particulièrement la paroi radiale 34a du demi-carter intermédiaire 34, et radialement entre le manchon cylindrique 30 et la poignée rotative 26, et plus particulièrement l'élément de poignée 26a. L'élément intermédiaire 120 traverse axialement la paroi radiale 34a par une ouverture 35a.

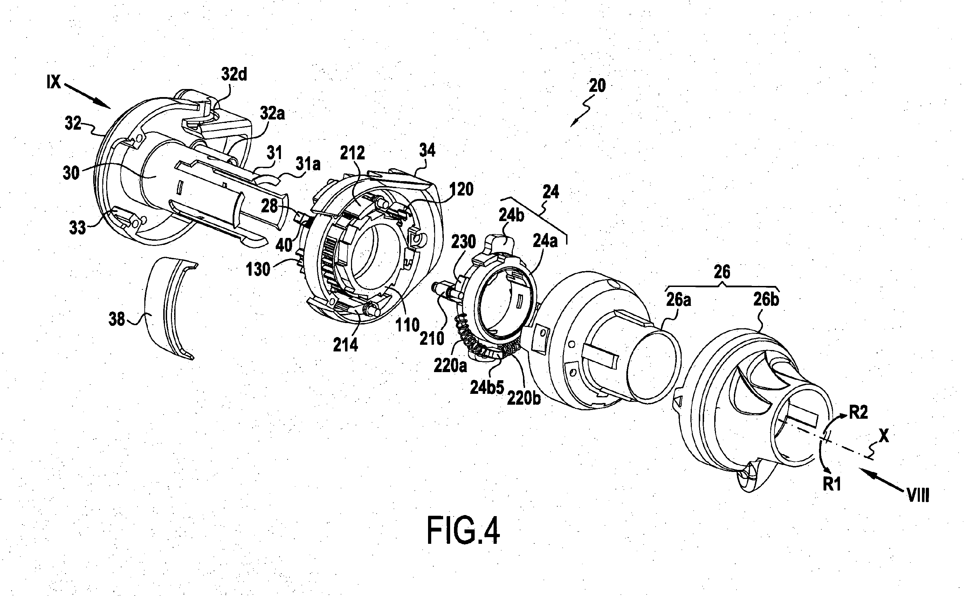

Comme représenté sur les figure 3A et 4, le demi-carter extérieur 32 présente une rainure 32d servant de guide au câble du dérailleur (non représenté), pour le guider vers l'élément d'entrainement 28.

Une fenêtre 33 est ménagée dans le carter, et plus particulièrement dans le demi-carter extérieur 32. Cette fenêtre est close par un élément transparent 38 (i.e. à travers lequel on peut voir à l'oeil nu). Un curseur 40 solidaire de l'élément d'entrainement 28 est visible à travers l'élément transparent 38 et indique la position de l'élément d'entrainement 28 relativement à la fenêtre 33, et forme ainsi un index d'indication de vitesse. Autrement dit, le curseur 40 indique sur quel pignon ou sur quel plateau le dérailleur positionne la chaine. Dans cet exemple, le curseur 40 est un autocollant, préférentiellement de couleur vive, collé sur l'élément d'entrainement 28.

Les moyens de positionnement séquentiel 200 comprennent les premiers cliquets 210, le deuxième cliquet 212 et le troisième cliquet 214. Les moyens de positionnement séquentiel 200 comprennent également les deux premières cames 230, une deuxième came 232 et une troisième came 234 solidaires de la poignée 26, et plus particulièrement de l'élément de poignée 26a. Dans cet exemple, les moyens de positionnement séquentiel 200 présentent deux premiers cliquets 210 et deux premières cames 230. Selon une variante, les moyens de positionnement séquentiel ne présentent qu'un seul premier cliquet et qu'une seule première came, ou plus de deux premiers cliquets et plus de deux premières cames. La première portion annulaire 110a présente alors une seule ou plus de deux séries de premières dents 111, chaque série de premières dents coopérant avec un premier cliquet 210. Les moyens de positionnement séquentiel 200 comprennent en outre deux ressorts de rappel 220a et 220b.

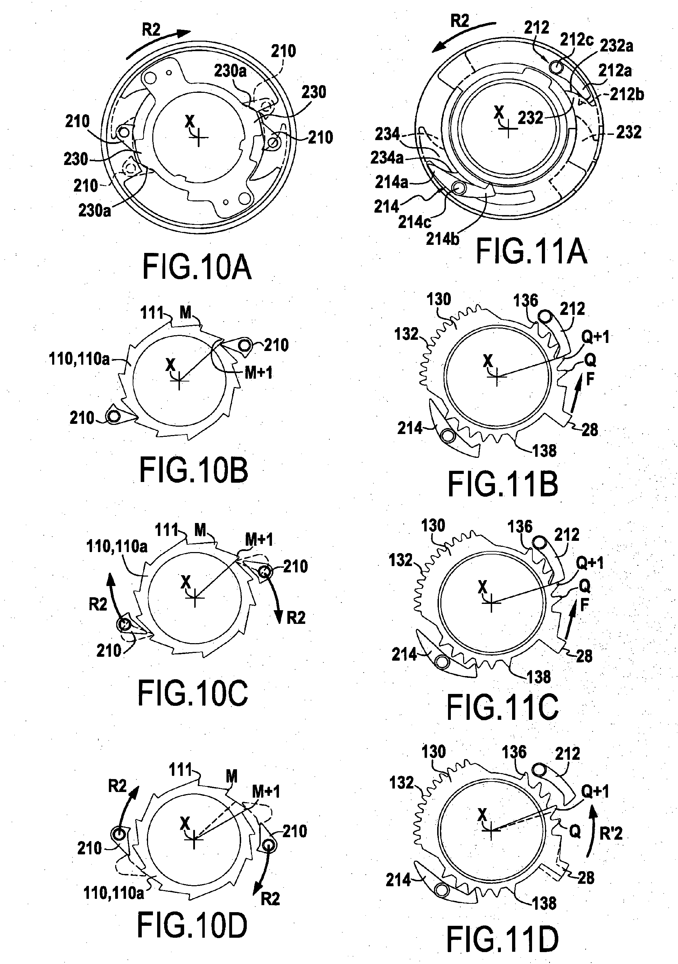

Les deux premiers cliquets 210 sont disposés diamétralement opposés par rapport à la première roue 110. Ces premiers cliquets 210 sont montés en rotation sur la poignée 26, et plus particulièrement de l'élément de poignée 26a. Comme représenté sur la figure 3B les trous 26a2 servent de palier pour les premiers cliquets 210. Des ressorts de torsion 211 coopèrent avec la poignée 26 et avec les premiers cliquets 210. Ces ressorts 211 maintiennent les premiers cliquets 210 engagés avec les premières dents 111. Chaque première came 230 coopère chacune avec un premier cliquet 210 et le désengage des premières dents 111 lorsque la poignée 26 tourne dans la deuxième direction R2. Plus particulièrement, chaque première came 230 présente une extrémité azimutale biseautée 230a qui coopère avec un premier cliquet 210 de manière à désengager ce premier cliquet 210 d'avec les premières dents 111. Pour ce faire, l'extrémité azimutale biseautée 230a s'engage en dessous du cliquet 210 de manière soulever son extrémité 210a coopérant avec les premières dents 111 et à le faire pivoter afin de contrer les efforts du ressort 211 et de le dégager d'avec les premières dents 111 (cf. fig. 10A et 10D). Dans cet exemple, les premiers cliquets 210 sont plus larges que la première roue 110 de manière à ce que les premières cames 230 coopèrent avec les premiers cliquets 210 sans interférer avec la première roue 110.

On comprend que les termes « dessous » et « dessus » sont relatifs à la direction radiale, le « dessous » étant le côté d'une pièce disposé radialement plus près de l'axe principal X que le « dessus », qui lui est donc le côté d'une pièce radialement le plus éloigné par rapport à l'axe principal X. De même, on comprend que le terme « soulever » signifie « écarter de l'axe principal X ».

Le deuxième cliquet 212 est monté en rotation sur l'élément fixe 24, et plus particulièrement sur la saillie 24b2. Le trou 24b21 forme un palier pour le deuxième cliquet 212. Par ailleurs, le trou 32b du demi-carter extérieur 32 forme un palier complémentaire pour le deuxième cliquet 212. Le ressort à torsion 213 coopère avec l'élément fixe 24 et avec le deuxième cliquet 212. Ce ressort 213 maintient le deuxième cliquet 212 engagé avec les deuxièmes dents 136. On notera que le deuxième cliquet 212 traverse axialement la paroi 34a du demi-carter intermédiaire 34 par l'ouverture 35b (cf. figures 3B et 4).

La deuxième came 232 s'étend azimutalement sur le pourtour intérieur de la poignée 26, et plus particulièrement de l'élément de poignée 26a. La deuxième came 232 présente une extrémité azimutale biseautée 232a qui coopère avec le deuxième cliquet 212 de manière à désengager le deuxième cliquet 212 des deuxièmes dents 136. Pour ce faire, le deuxième cliquet 212 présente une lame 212a s'étendant du même côté que la partie d'engagement 212b s'engageant avec les deuxièmes dents 136, par rapport à l'arbre de palier 212c (i.e. selon la direction azimutale), l'extrémité azimutale biseautée 232a s'engageant sous la lame 212a de manière à soulever la lame 212a et à faire pivoter le deuxième cliquet 212 afin de contrer les efforts du ressort 213 et de désengager la partie d'engagement 212b des deuxièmes dents 136 (cf. fig. 11A et 11D). Dans cet exemple, le deuxième cliquet 212 est plus large (i.e. selon la direction axiale) que la deuxième roue 130 de manière à ce que la deuxième came 232 coopère avec le deuxième cliquet 212 sans interférer avec la deuxième roue 130.

Le troisième cliquet 214 est monté en rotation sur l'élément fixe 24, et plus particulièrement sur la saillie 24b3. Le trou 24b31 forme un palier pour le troisième cliquet 214. Par ailleurs, le trou 32c du demi-carter extérieur 32 forme un palier complémentaire pour le troisième cliquet 214. Le ressort à torsion 215 coopère avec l'élément fixe 24 et avec le troisième cliquet 214. Ce ressort 215 maintient le troisième cliquet 214 désengagé d'avec les troisièmes dents 138. On notera que le troisième cliquet 214 traverse axialement la paroi 34a du demi-carter intermédiaire 34 par l'ouverture 35c (cf. figures 3B et 4).

La troisième came 234 s'étend azimutalement sur le pourtour intérieur de la poignée 26, et plus particulièrement de l'élément de poignée 26a. La troisième came 234 présente une extrémité azimutale biseautée 234a qui coopère avec le troisième cliquet 214 de manière à engager le troisième cliquet 214 avec les troisièmes dents 138. Pour se faire de troisième cliquet 214 présente une lame 214a s'étendant du côté opposé à la partie d'engagement 214b s'engageant avec les troisièmes dents 138, par rapport aux arbres de palier 214c (i.e. selon la direction azimutale), l'extrémité azimutale biseautée 234a s'engageant dessous la lame 214a de manière à soulever la lame 214a et à faire pivoter le deuxième cliquet 214 afin de contrer les efforts du ressort 215 et d'engager la partie d'engagement 214b avec une troisième dent 138 (cf. fig. 11A et 11D). Dans cet exemple, le troisième cliquet 214 est plus large que la deuxième roue 130 de manière à ce que la troisième came 234 coopère avec le troisième cliquet 214 sans interférer avec la deuxième roue 130.

Les premières cames 230 coopèrent avec les premiers cliquets 210 dans le sens de rotation R2 en s'engagent sous les premiers cliquets 210 par l'arrière, i.e. du côté opposé où s'étend l'extrémité 210a des cliquets 210 coopérant avec les dents 111 par rapport à l'arbre de palier 210b. La deuxième came 232 coopère avec le deuxième cliquet 212 en s'engagent sous le deuxième cliquet 232 par l'avant, i.e. du côté où s'étend la partie d'engagement 212b par rapport à l'arbre de palier 212c. La troisième came 234 coopère avec le troisième cliquet 214 en s'engageant sous le troisième cliquet 214 par l'arrière, i.e. du côté opposé au côté où s'étend la partie d'engagement 214b par rapport à l'arbre de palier 214c. Les premiers cliquets 210 et le deuxième cliquet 212 sont orientés azimutalement dans le même sens, tandis que le troisième cliquet 214 est orienté azimutalement à l'opposé des premiers et deuxième cliquets 210 et 212. L'orientation azimutale d'un cliquet est indiquée par le sens azimutal vers lequel s'étend l'extrémité ou la partie d'engagement d'un cliquet depuis son arbre de palier.

Les ressorts de rappel 220a et 220b sont disposés dans le logement 221 ménagé dans la poignée 26. Le logement 221 reçoit également la saillie axiale 24b5. Les ressorts de rappel 220a et 220b sont des ressorts de compression qui coopèrent azimutalement en appui avec la saillie axiale 24b5 de la saillie radiale 24b3 de l'élément fixe 24 d'une part, et avec les parois radiales du logement 221 d'autre part. Ces ressorts de rappel ramènent automatiquement la poignée 26 en position neutre N. Selon une variante, les ressorts de rappel 220a et 220b peuvent être remplacés par un ou plusieurs ressorts à torsion.

Dans cet exemple, la première bague 24a, les ressorts 211, 213, 215, 220a, 220b, et la vis de fixation non représentée sont en métal. Les arbres de paliers 210b des premiers cliquets 210 sont préférentiellement en métal mais peuvent, selon une variante, être en plastique. Les arbres 212c et 214c sont en plastique mais peuvent être, selon une variante, en métal. L'habillage de poignée 26b est en caoutchouc. Les autres éléments de la manette 20 sont en plastique.

FONCTIONNEMENT DES MOYENS DE COUPLAGE

Les moyens de couplage 100 sont configurés pour coupler en rotation la poignée 26 et l'élément d'entrainement 28 de sorte que la course angulaire de l'élément d'entrainement 28 est inférieure à la course angulaire de la poignée 26. En effet, dans le premier sens de rotation R1 les premiers cliquets 210 sont engagés avec les premières dents 111 de la première roue 110, et donc la poignée 26 entraine la première roue 110 en rotation d'une même course angulaire. Ainsi, la première roue 110 entraine en rotation l'élément intermédiaire 120 qui lui-même entraine la deuxième roue 130. L'élément d'entrainement 28 étant solidaire de la deuxième roue 130, la rotation de la deuxième roue 130 entraine l'élément d'entrainement 28 d'une même course angulaire.

Sur les figures 5A, 5B et 5C, les sens de rotations R1 et R2 indiquent les sens de rotation de la poignée 26 et de la première roue 110 tandis que les sens de rotation R'1 et R'2 indiquent les sens de rotation de la deuxième roue 130 et de l'élément d'entrainement 28. Dans cet exemple, les sens R1 et R'1 sont orientés dans le même sens, et par conséquent, les sens R2 et R'2 sont également orientés dans le même sens. Bien entendu, selon une variante, les sens R1 et R'1 sont orientés en sens contraire.

Comme représenté sur la figure 5B, la course en rotation β1 de la première roue 110 est supérieure à la course en rotation β2 de la deuxième roue 130. Bien entendu, on comprend que le ratio entre la course angulaire β1 et la course angulaire β2 est le même que la première roue 110 soit entrainée dans le premier sens R1 ou le second sens R2, ou encore que la deuxième roue 130 soit déplacée dans le premier sens R'1 ou le second sens R'2.

Ainsi, la poignée 26 étant couplée en rotation avec la première roue 110 dans le sens de rotation R1 et l'élément d'entrainement 28 étant fixée de la deuxième roue 130, lorsque la poignée 26 est entrainée d'une course angulaire β1, l'élément d'entrainement 28 est entrainé d'une course angulaire β2 inférieure à la course angulaire β1. Ainsi, l'élément d'entrainement 28 entraine l'extrémité du câble de dérailleur 16a à l'opposé de la force de rappel F (cf. fig. 5B) générée par les ressorts de rappel du dérailleur 14. Inversement, lorsque la deuxième roue 130 peut se déplacer selon le second sens R'2 grâce à la force de rappel F, la course angulaire β1 de la première roue 110 (mais pas de la poignée 26 qui n'est pas couplée en rotation avec la première roue 110 dans le second sens de rotation R2) est supérieure à la course angulaire β2 de la deuxième roue 130 (et donc de l'élément d'entrainement 28).

Par ailleurs, grâce aux rapports des rayons des différents éléments de la manette 20, l'effort appliqué par l'utilisateur au niveau de la poignée 26 pour contrer la force de rappel F est réduit par rapport à une manette dont les moyens de couplage ne réduisent pas la course angulaire de l'élément d'entrainement par rapport à la course angulaire de la poignée.

En effet, dans cet exemple, le rapport des rayons de la troisième roue 122 et de la quatrième roue 124 permet de multiplier l'effort appliqué par l'utilisateur sur la première roue 110 par un coefficient C1 :

$$C1 = RC/RD = 9.8/4.4 = 2.23$$

Ce coefficient C1 supérieur à 1 (un) est une conséquence de la réduction de déplacements opérée entre la première roue 110 et la deuxième roue 130 des moyens de couplage 100.

Par ailleurs, la différence de longueur entre les rayons de la première roue 110 et de la poignée 26 forme un bras de levier qui multiplie l'effort appliqué par l'utilisateur sur la poignée par un coefficient C2 :

$$C2 = RA/RB = 20.6/15.5 = 1.33$$

En outre, la différence de longueur entre les rayons de la deuxième roue 130 et de l'élément d'entrainement 28 forme également un bras de levier qui multiplie l'effort reçu par la deuxième roue 130 par un coefficient C3 :

$$C3 = RE/RF = 20.9/16.8 = 1.24$$

Au final, grâce à ces différents coefficients, l'effort appliqué par l'utilisateur sur la poignée 26 est multiplié par un coefficient global C égal au produit de tous ces coefficients C1, C2 et C3 soit :

$$C = C1 \times C2 \times C3 = 3.68$$

Ainsi, l'effort à fournir sur la poignée 26 pour contrer la force F et entrainer l'élément d'entrainement 28 dans la direction R'1 (et donc passer les vitesses) est réduit de ce coefficient C.

FONCTIONNEMENT DES MOYENS DE POSITIONNEMENT SEQUENTIEL

En référence à la figure 5C, les moyens de positionnement séquentiel 200 (non représentés) coopèrent avec les moyens de couplage 100 et avec la poignée rotative 26, de sorte que lorsque la poignée rotative 26 est déplacée dans un premier sens de rotation de commande R1 depuis une position neutre N vers une première position P1 ou dans un second sens de rotation de commande R2, opposé au premier sens de rotation de commande R1, depuis position neutre N vers une seconde position P2, la poignée rotative 26 est ramenée automatiquement en position neutre N par les moyens de positionnement séquentiel 200, l'élément d'entrainement 28 étant déplacé d'un angle prédéterminée β dans un premier sens de rotation d'entrainement R'1 depuis une première position initiale P' vers une première position finale P'1 lors des déplacements de la poignée rotative 26 entre la position neutre N et la première position P1, tandis que l'élément d'entrainement 28 est déplacé de l'angle prédéterminée β dans un second sens de rotation d'entrainement R'2, opposé au premier sens de rotation d'entrainement R'1, depuis une deuxième position initiale P' (dans cet exemple, la deuxième position initiale et similaire la première position initiale) vers une deuxième position finale P'2 lors des déplacements de la poignée rotative 26 entre la position neutre N et la seconde position P2.

Dans cet exemple, les moyens de couplage 100 formant un réducteur de déplacement, on constate sur la figure 5C que la course angulaire de la poignée 26 entre la position neutre N et la première position P1 et la course angulaire entre la position neutre N et la second position P2 sont supérieures à la course angulaire de l'élément d'entrainement 28 entre la position initiale P' et la première position finale P'1 et à la course angulaire entre la position initiale P' et la deuxième position finale P'2.

Dans cet exemple, le premier sens de rotation de commande R1 est orienté dans le même sens que le premier sens de rotation d'entrainement R'1, et donc le second sens de rotation de commande R2 est orienté dans le même sens que le second sens de rotation d'entrainement R'2, mais peuvent bien entendu être opposés selon une variante. Par la suite, les premier et second sens de commande R1 et R2 désignent également les rotations tant de la poignée 26 que de la première roue 110 tandis que les premier et second sens rotation d'entrainement R'1 et R'2 désignent également les rotations tant de l'élément d'entrainement 28 que de la deuxième roue 130.

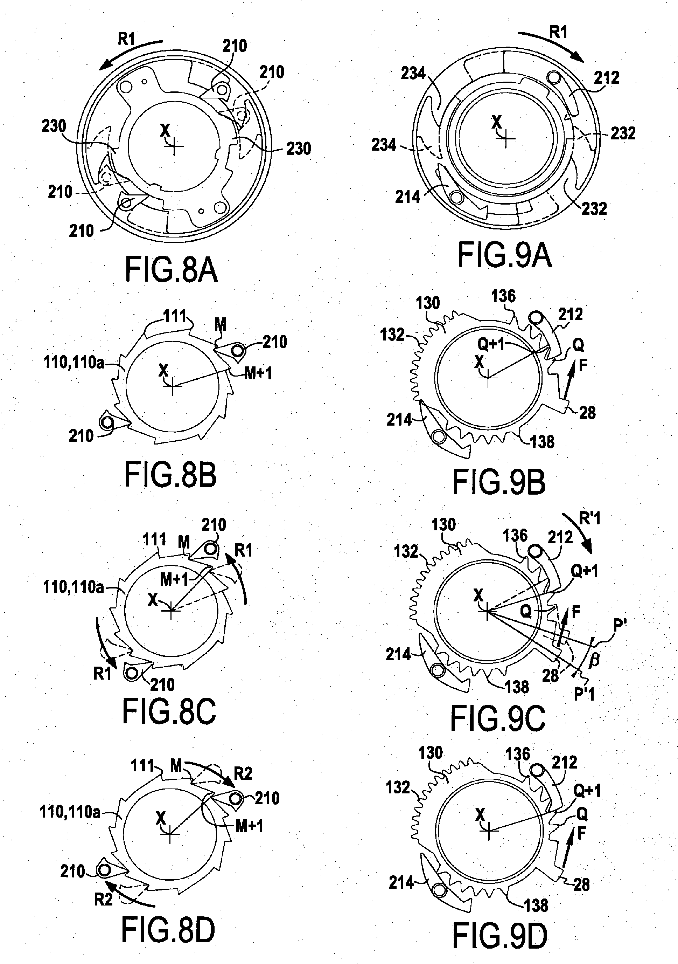

Dans la position neutre N de la poignée 26, les premiers cliquets 210 sont engagés avec les premières dents 111. La forme des premières dents 111 est telle que les premiers cliquets 210 autorisent les rotations de la première roue 110 dans le premier sens de rotation de commande R1 tandis que les premiers cliquets 210 bloquent les rotations de la première roue 110 dans le second sens de rotation R2 (cf. fig. 8A). Les premiers cliquets 210 étant montés sur la poignée 26 et donc étant mobile en rotation autour de l'axe principal X, on comprend que les premiers cliquets 210 peuvent entrainer la première roue 110 dans le premier sens de rotation de commande R1 (cf. fig. 8C) mais qu'ils ne peuvent pas entrainer la première roue 110 dans le second sens de rotation R2 (cf. fig. 8D).

Par ailleurs, dans la position neutre N de la poignée 26, le deuxième cliquet 212 est engagé avec une deuxième dent 136 tandis que le troisième cliquet 214 est désengagé des troisièmes dents 138 (cf. fig. 9B). Ainsi, les mouvements de rotation de la deuxième roue 130 ne sont pas bloqués par le troisième cliquet 214. La forme des deuxièmes dents 136 est telle que le deuxième cliquet 212 autorise les rotations de la deuxième roue 130 dans le premier sens de rotation d'entrainement R'1 (cf. fig. 9C) tandis que le deuxième cliquet 212 bloque les rotations de la deuxième roue 130 dans le second sens de rotation d'entrainement R'2 (cf. fig. 9D).

Ainsi, dans la position neutre N, les rotations de la première roue 110 dans le second sens de commande R2 sont bloquées par les premiers cliquets 210. En outre, les rotations de la deuxième roue 130 dans le second sens d'entrainement R'2 sont bloquées par le deuxième cliquet 212. On notera que par le biais de l'élément intermédiaire 120, en bloquant les rotations de la première roue 110 dans second sens de commande R2, les premiers cliquets 210 bloquent également les rotations de la deuxième roue 130 dans le second sens d'entrainement R'2. De même, par le biais de l'élément intermédiaire 120, en bloquant les rotations de la deuxième roue 130 dans le second sens d'entrainement R'2, le deuxième cliquet 212 bloque également les rotations de la première roue 110 dans le second sens de commande R2. Ceci permet de compenser les jeux éventuels entre les dents des différents moyens de couplage 100 d'une part et entre les dents des moyens de couplage 100 et les cliquets des moyens de positionnement séquentiel 200 d'autre part, et de toujours assurer un blocage dans la direction R2, et donc R'2 (et vice versa).

Par ailleurs, dans la position neutre N, l'effort de rappel F, tendant à entrainer la deuxième roue 130 dans le second sens d'entrainement R'2, bloque les rotations de la deuxième roue 130 dans le premier sens d'entrainement R'1. Par le biais de l'élément intermédiaire 120, cet effort de rappel bloque également les rotations de la première roue 110 dans le second sens de commande R2.

On va maintenant décrire les mouvements des roues 110 et 130 et leurs interactions avec les cliquets 210, 212 et 214 pendant les mouvements de la poignée 26 entre la position neutre N et la première position P1.

Les figures 8A et 9A représentent l'interaction des cliquets avec les cames lors des mouvements la poignée 26 entre la position neutre N et la première position P1, c'est-à-dire lorsque la poignée 26 est amenée de la position neutre N vers la première position P1, ou lorsque la poignée 26 est ramenée de la première position P1 vers la position neutre N. La figure 8A est une coupe représentant les cliquets 210 et les premières cames 230 vue selon la flèche VIII de la figure 4. La figure 9A est une coupe des diquets 212 et 214 et des cames 232 et 234 vue selon la flèche IX de la figure 4. Sur les figures 8A et 9A, les traits discontinus représentent les éléments (cames 232 et 234 et premiers cliquets 210) liés à la poignée 26 en position neutre N, tandis que ces mêmes éléments sont représentés en traits continus lorsque la poignée 26 est dans la première position P1. Aucune des cames 230, 232 et 234 ne coopère avec les premiers, deuxième et troisième cliquets 210, 211 et 214 lors des mouvements de la poignée 26 entre la position neutre N et la position P1.

Pour rappel, les premiers cliquets 210 sont solidaires de la poignée 26, et sont donc entrainés en rotation par la poignée 26 autour de l'axe principal X, tandis que les deuxièmes et troisièmes cliquets 212 et 214 sont solidaires de l'élément fixe 24, et sont donc immobiles par rapport à l'axe principal X. Les premières cames 230 sont solidaires de l'élément fixe 24, et sont donc immobiles tandis que les cames 232 et 234 sont solidaires de la poignée 26, et sont donc entrainées en rotation par la poignée 26 autour de l'axe principal X.

Les figures 8B à 8D représentent la première roue 110, et plus particulièrement la première portion annulaire 110a, et les premiers cliquets 210 en coupe vue selon la flèche VIII de la figure 4. Les figures 9B à 9D représentent la deuxième roue 130, le deuxième cliquet 212 et le troisième cliquet 214 en coupe vue selon la flèche IX de la figure 4.

Les figures 8B et 9B correspondent à une configuration où la poignée 26 est dans la position neutre N. Les figures 8C et 9C correspondent à une configuration où la poignée 26 a pivoté dans le premier sens de commande R1 et a été amenée dans la première position P1 depuis la position neutre des figures 8B et 9B. Les figures 8D et 9D correspondent à une configuration où la poignée 26 a pivoté dans le second sens de commande R2 et a été ramenée dans la position neutre N depuis la première position P1 des figures 8C et 9C.

Lorsque la poignée 26 est amenée de la position neutre N vers la première position P1 selon le premier sens de rotation de commande R1, chaque premier cliquet 210 reste engagé avec une première dent 111 et entrainent la première roue 110 dans le premier sens de rotation de commande R1 (cf. figures 8B et 8C), ce qui a pour conséquence d'entrainer la deuxième roue 130, et donc l'élément d'entrainement 28 dans le premier sens de rotation d'entrainement R'1 (cf. figure 9B et 9C). La position des premiers cliquets 210 et le rayon repérant la position azimutale de la première roue 110 correspondant à la figure 8B sont représentés en traits discontinus sur la figure 8C. La position de l'élément d'entrainement 28 et le rayon représentant la position azimutale de la deuxième roue 130 correspondant à la figure 9B sont représentés en traits discontinus sur la figure 9C.

Ainsi, entre la figure 8B et la figure 8C, la première roue 110 et les premiers cliquets 110 ont pivoté dans le premier sens de rotation de commande R1 tandis qu'entre la figure 9B et la figure 9C, seule la deuxième roue 130 a pivoté selon le premier sens de rotation d'entrainement R'1. Au cours de ce mouvement, le deuxième cliquet 212 immobile en rotation autour de l'axe principal X, se désengage de la deuxième dent 136 numéro Q pour s'engager avec la deuxième dent 136 numéro Q+1 (cf. figures 9B et 9C). Ainsi l'élément d'entrainement 28 est déplacé dans le premier sens de rotation d'entrainement R'1 d'un angle prédétermine β de la première position initiale P' à la première position finale P'1, et reste boqué dans cette position grâce au deuxième cliquet 212.

Lors du passage du deuxième cliquet 212 de la deuxième dent 136 Q à la deuxième dent 136 Q+1, les premiers cliquets 210 restent engagés avec la première dent 111 numéro M de sorte que la force de rappel F ne peut pas ramener l'élément d'entrainement 28 de la première position finale P'1 à la première position initiale P'.

Lorsque la poignée 26 est dans la première position P1, le ressort de rappel 220a est comprimé entre la troisième came 234 et l'ergot 24b5 et tend à ramener la poignée 26 en position neutre N. Ainsi, quand l'utilisateur relâche la poignée 26, cette dernière revient automatiquement en position neutre N. Bien entendu, l'utilisateur peut également ramener lui-même la poignée 26 en position neutre N.

Au cours du mouvement de la poignée 26 de la première position P1 vers la position neutre N selon le second sens de rotation de commande R2, les premiers cliquets 210 se désengagent des premières dents 111 numéro M pour s'engager avec les premières dents 111 numéro M+1 (cf. figures 8B et 8C). Le deuxième cliquet 212 étant engagé avec une deuxième dent 136 pendant le retour de la poignée 26 de la première position P1 vers la position neutre N, les moyens de couplage 100 sont bloqués en rotation et la force de rappel F ne peut pas ramener l'élément d'entrainement 28 de la première position finale P'1 à la première position finale P' (cf. figures 9B et 9C). On comprend donc que les première et deuxième roues 110 et 130 ne bougent pas entre les figures 8C, 9C et 8D, 9D, seuls les premiers cliquets 210 tournant (de concert avec la poignée 26) dans le second sens de rotation de commande R2. La position des premiers cliquets 210 correspondant à la figure 8C est représentée en traits discontinus sur la figure 8D.

Lors des mouvements de la poignée 26 entre la position neutre N et la première position P1, il y a toujours au moins un cliquet parmi les premiers cliquets 210 et le deuxième cliquet 212 qui est engagé avec les premières dents 111 ou les deuxièmes dents 136.

Ainsi, au cours des mouvements de la poignée 26 entre la position neutre N et la première position P1, le passage de l'élément d'entrainement 28 de la position initiale P' à la première position finale P'1 est effectué en une seule étape lors du passage de la poignée 26 de la position neutre N à la première position P1. Lors des mouvements de la poignée 26 entre la position neutre N et la première position P1, l'élément d'entrainement 28 est ainsi entrainé d'un angle prédéterminé β dans le premier sens de rotation d'entrainement R'1 depuis la position initiale P' vers la position finale P'1 (cf. fig.9C). On passe ainsi d'une vitesse T à une vitesse T+1. Pour passer à la vitesse T+2, l'utilisateur amène de nouveau la poignée 26 de la position neutre N à la première position P1, et ainsi de suite. Bien entendu, selon une variante, le passage de la poignée 26 de la position neutre N à la première position P1 permet de passer de la vitesse T à une vitesse T-1.

On va maintenant décrire les mouvements des roues 110 et 130 et leurs interactions avec les cliquets 210, 212 et 214 pendant les mouvements de la poignée 26 entre la position neutre N et la seconde position P2.

Les figures 10A et 11A représentent l'interaction des cliquets avec les cames lors des mouvements la poignée 26 entre la position neutre N et la seconde position P2, c'est-à-dire lorsque la poignée 26 est amenée de la position neutre N vers la seconde position P2 selon le second sens de rotation de commande R2, ou lorsque la poignée 26 est amenée de la seconde position P2 vers la position neutre N selon le premier sens de rotation de commande R1. La figure 10A est une coupe représentant les cliquets 210 et les premières cames 230 vue selon la flèche VIII de la figure 4. La figure 11A est une coupe représentant les cliquets 212 et 214 et les cames 232 et 234 vue selon la flèche IX de la figure 4. Sur les figures 10A et 11A, les traits discontinus représentent les éléments (cames 232 et 234 et premiers cliquets 210) liés à la poignée 26 en position neutre N, tandis que ces mêmes éléments sont représentés en traits continus lorsque la poignée 26 est dans la seconde position P2.

En référence à la figure 10A, lorsque la poignée 26 est amenée de la position neutre N à la seconde position P2, chaque première came 230 coopère avec un premier cliquet 210, ce qui a pour effet de désengager les premiers cliquets 210 d'avec les premières dents 211. La première roue 110 est alors libre de tourner dans le second sens de commande R2.

En référence à la figure 11A, lorsque la poignée 26 est amenée de la position neutre N à la seconde position P2, la troisième came 234 coopère d'abord avec le troisième cliquet 214 qui s'engage avec une troisième dent 138. Ainsi, la deuxième roue 130 est bloquée en rotation tant dans le premier sens d'entrainement R'1 que dans le second sens de rotation d'entrainement R'2. Ensuite, la deuxième came 232 coopère avec le deuxième cliquet 212 qui se désengage alors des deuxièmes dents 136. On comprend que cet engagement successif de la troisième came 234 avec le troisième cliquet 214 puis de la deuxième came 232 avec le deuxième cliquet 212 est obtenu grâce à une distance azimutale dans la position neutre N de la poignée 26 plus grande entre la deuxième came 232 et le deuxième cliquet 212 que la distance azimutale entre la troisième came 234 et le troisième cliquet 214.

Lors de la rotation de la poignée 26 selon le second sens de rotation de commande R2 de la position neutre N à la deuxième position P2, les premières cames 230 coopèrent en premier avec les premiers cliquets 210 qui commencent ainsi à se dégager des premières dents 111 en premier. Ensuite, la troisième came 234 coopère avec le troisième cliquet 214, le troisième cliquet 214 s'engageant alors avec les troisièmes dents 138, et encore après la deuxième came 232 coopère avec le deuxième cliquet 212, ce dernier se dégageant ainsi des deuxièmes dents 136.

Les figures 10B à 10F représentent la première roue 110, et plus particulièrement la première portion annulaire 110a, et les premiers cliquets 210 en coupe vue selon la flèche VIII de la figure 4. Les figures 11B à 11F représentent la deuxième roue 130, le deuxième cliquet 212 et le troisième cliquet 214 en coupe vue selon la flèche IX de la figure 4.

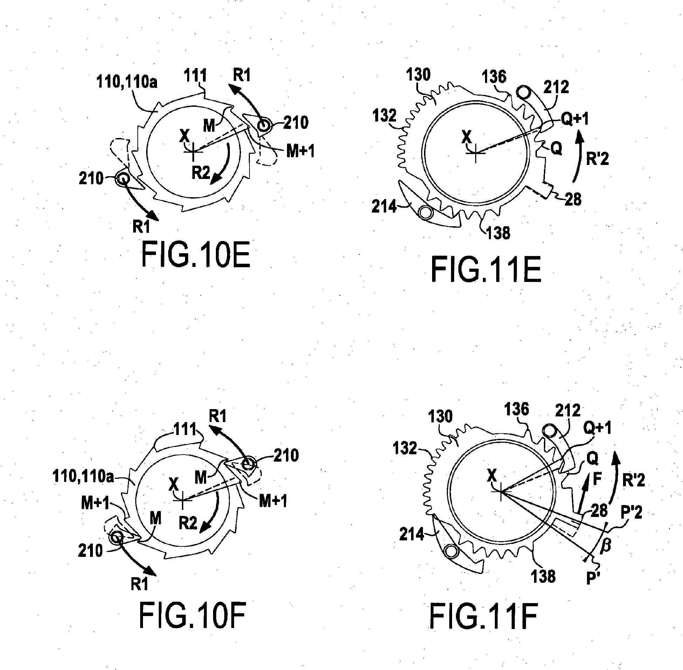

Les figures 10B et 11B correspondent à une configuration où la poignée 26 est dans la position neutre N. Les figures 10C et 11C correspondent à une configuration où la poignée 26 est amenée dans une position intermédiaire entre la position neutre N et la seconde position P2 depuis la position neutre des figures 10B et 11B, dans laquelle la deuxième came 232 ne coopère pas encore avec le deuxième cliquet 212, tandis que les premières cames 230 coopèrent avec les premiers cliquets 210 et que la troisième came 234 coopère avec le troisième cliquet 214. Les figures 10D et 11D correspondent à une configuration où la poignée 26 a été amenée dans la seconde position P2 depuis la position intermédiaire des figures 10C et 11C. Les figures 10E et 11E correspondent à une configuration où la poignée 26 a été ramenée dans la position intermédiaire des figures 10C et 11C depuis la seconde position P2 des figures 10D et 11D. Les figures 10F et 11F correspondent à une configuration où la poignée 26 a été ramenée dans la position neutre N depuis la position intermédiaire des figures 10E et 11E.

Dans cet exemple, on comprend que les positions intermédiaires de la poignée 26 correspondant aux figures 10C, 11C, 10E et 11E correspondent toutes à la même position intermédiaire de la poignée 26.

Les figures 10B et 11B correspondent respectivement aux figures 8D et 9D, où la poignée 26 est dans la position neutre N, les premiers cliquets 210 étant engagés avec des premières dents 111 numéro M+1 et le deuxième cliquet 212 étant engagé avec la deuxième dent 136 numéro Q+1.

Lors du passage de la poignée 26 de la position neutre N à la position intermédiaire, les premiers cliquets 210 ont pivoté selon le deuxième sens de rotation de commande R2 (car ils sont liés à la poignée 26). Le blocage de la première roue 110 par les premiers cliquets 210 dans le second sens de rotation de commande R2 est relâché tandis que le deuxième cliquet 212 bloque toujours la deuxième roue dans le second sens de rotation d'entrainement R'2. Le troisième cliquet 214 commence à s'engager entre deux troisièmes dents 138. La position des premiers cliquets 210 correspondant à la figure 10B est représentée en traits discontinus sur la figure 10C.

Lors du passage de la poignée 26 de la position intermédiaire à la seconde position P2 dans le second sens de rotation de commande R2 (cf. fig. 10D et 11D), les premières cames 230 coopèrent avec les premiers cliquets 210 (qui ont donc encore pivotés selon le second sens de rotation de commande R2 par rapport à la figure 10C), la deuxième came 232 coopère avec le deuxième cliquet 212 et la troisième came 234 coopère avec le troisième cliquet 214 de sorte que les premiers cliquets 210 sont complètement désengagés d'avec les premières dents 111 tandis que le deuxième cliquet 212 est complètement désengagé d'avec les deuxièmes dents 136 et que le troisième cliquet 214 est totalement engagé avec les troisièmes dents 138.

L'espacement angulaire entre chaque troisième dent 138 permet à la force de rappel F de déplacer la deuxième roue 130 dans le second sens d'entrainement R'2 de sorte que le deuxième cliquet 212, et plus particulièrement la dent du deuxième cliquet 212 coopérant avec les deuxièmes dents 136, est en position pour s'engager avec la deuxième dent 136 numéro Q (cf. fig. 11D). On comprend donc que l'espacement angulaire des troisièmes dents 138 est tel qu'il permet un mouvement de rotation de la deuxième roue 130 lorsque le troisième cliquet 214 est engagé avec les troisièmes dents 138 permettant au deuxième cliquet 212 de passer à l'aplomb d'une deuxième dent 136, afin de passer d'une deuxième dent Q+1 à une deuxième dent Q.

La rotation de la deuxième roue 130 dans le second sens d'entrainement R'2 entraine la rotation de la première roue 110 dans le second sens de commande R2. Ainsi, les premiers cliquets 210 se retrouvent en position pour s'engager avec les premières dents 111 numéro M (cf. fig. 10D).

La position des premiers cliquets 210 et le rayon repérant la position azimutale de la première roue 110 correspondant à la figure 10C sont représentés en traits discontinus sur la figure 10D. La position de l'élément d'entrainement 28 et le rayon représentant la position azimutale de la deuxième roue 130 correspondant à la figure 11C sont représentés en traits discontinus sur la figure 11D. On comprend donc que la première roue 110 et les premiers cliquets 210 ont pivoté dans le second sens de rotation de commande R2 tandis que la deuxièmes roue 130 a pivoté selon le second sens de rotation d'entrainement R'2.

Lorsque la poignée 26 est à la seconde position P2, le ressort de rappel 220b est comprimé entre la deuxième came 232 et l'ergot 24b5 et tend à ramener la poignée 26 en position neutre N. Ainsi, quand l'utilisateur relâche la poignée 26, cette dernière revient automatiquement en position neutre N. Bien entendu, l'utilisateur peut également ramener lui-même la poignée 26 en position neutre N.

Lors du mouvement de la poignée 26 depuis la seconde position P2 vers la position neutre N, les cames 230, 232 et 234 et les cliquets 210, 212 et 214 se dégagent de leurs coopérations réciproques et les ressorts de rappel 211, 213 et 215 (cf. fig. 3A et 3B) ramènent les cliquets 210, 212 et 214 dans leurs configurations en position neutre N de la poignée 26.

Ainsi, lors du retour de la poignée 26 de la seconde position P2 à la position intermédiaire, les premiers cliquets 210 suivant le mouvement de la poignée 26, s'engagent avec les premières dents 111 numéro M et le deuxième cliquet 212 s'engage avec la deuxième dent 136 numéro Q (i.e. entre la dent Q et la dent Q+1) tandis que le troisième cliquet 214 se dégage des troisièmes dents 138 (cf. fig.10E et fig. 11E). Sur la figure 11E le deuxième cliquet 212 est en appui radial sur la dent 136 numéro Q+1 grâce au ressort de rappel 213 qui ramène le deuxième cliquet 212 entre les deux dents Q et Q+1. Au fur et à mesure que le troisième cliquet 214 se dégage des troisièmes dents 138 et que les premiers cliquets 210 et le deuxième cliquet 212 s'engagent respectivement avec les premières dents 111 numéro M et la deuxièmes dent numéro Q, la force de rappel F déplace la deuxième roue 130 dans le second sens d'entrainement R'2. En conséquence, la première roue 110 est entrainée dans le second sens de rotation de commande R2.

La position des premiers cliquets 210 et le rayon repérant la position azimutale de la première roue 110 correspondant à la figure 10D sont représentés en traits discontinus sur la figure 10E. La position de l'élément d'entrainement 28 et le rayon représentant la position azimutale de la deuxième roue 130 correspondant à la figure 11D sont représentés en traits discontinus sur la figure 11E. On comprend donc que la première roue 110 a pivoté dans le second sens de rotation de commande R2 tandis que les premiers cliquets 210 ont pivoté dans le premier sens de rotation de commande R1. La deuxième roue 130 a pivoté selon le second sens de rotation d'entrainement R'2.

Lors du retour de la poignée 26 de la position intermédiaire à la position neutre N, les mouvements décrits lors du passage de la poignée 26 de la seconde position P2 à la position intermédiaire se poursuivent jusqu'à ce que le deuxième cliquet 212 soit en appui contre la deuxième dent 136 numéro Q et bloque la rotation de la deuxième roue 130 dans le second sens de rotation d'entrainement R'2. Les premiers cliquets 210 sont amenés en appui azimutal sur les premières dents 111 et le troisième cliquet 214 est totalement désengagé des troisièmes dents 138. Lorsque la poignée 26 est revenue en position neutre N, les premiers cliquets 210 coopèrent avec les premières dents 111 numéro M, le deuxièmes cliquet 212 coopère avec la deuxième dent 136 numéro Q et le troisième cliquet 214 ne coopère avec aucune troisième dent 138. L'élément d'entrainement 28 est alors dans la deuxième position finale P'2.

La position des premiers cliquets 210 et le rayon repérant la position azimutale de la première roue 110 correspondant à la figure 10E sont représentés en traits discontinus sur la figure 10F. La position de l'élément d'entrainement 28 et le rayon représentant la position azimutale de la deuxième roue 130 correspondant à la figure 11E sont représentés en traits discontinus sur la figure 11F. On comprend donc que la première roue 110 a pivoté dans le second sens de rotation de commande R2 tandis que les premiers cliquets 210 ont pivoté dans le premier sens de rotation de commande R1. La deuxième roue 130 a pivoté selon le second sens de rotation d'entrainement R'2.

Ainsi, au cours des mouvements de la poignée 26 entre la position neutre N et la seconde position P2, le passage de l'élément d'entrainement 28 de la deuxième position initiale P' à la deuxième position finale P'2 est effectué en deux étapes : une première étape lors du passage de la poignée 26 de la position neutre N à la deuxième position P2, et une deuxième étape lors du retour de la poignée 26 de la deuxième position P2 à la position neutre N.

Lors des mouvements de la poignée 26 entre la position neutre N et la seconde position P2, l'élément d'entrainement 28 est ainsi entrainé d'un angle prédéterminé β dans le second sens de rotation d'entrainement R'2 depuis la deuxième position initiale P' vers la deuxième position finale P'2 (cf. fig. 11F). On passe ainsi de la vitesse T+1 à une vitesse T. Pour passer à la vitesse T-1, l'utilisateur amène de nouveau la poignée 26 de la position neutre N à la seconde position P2, et ainsi de suite. Bien entendu, selon une variante, le passage de la poignée 26 de la position neutre N à la seconde position P2 permet de passer de la vitesse T+1 à une vitesse T+2.

On note que la position initiale P' de la figure 11C correspond à la première position finale P'1 de la figure 9C tandis que la deuxième position finale P'2 de la figure 11C correspond à la position initiale P' de de figure 9C.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation décrits peuvent être combinées dans des modes de réalisation additionnels. Par conséquent, la description et les dessins doivent être considérés dans un sens illustratif plutôt que restrictif.

**Revendications**

1. Manette de changement de vitesse pour bicyclette, présentant un jour (22) s'étendant selon un axe principal (X), ladite manette (20) étant configurée pour être montée de manière coaxiale sur une poignée de guidon (12a) de bicyclette, ladite manette (20) comprenant :

   - un élément fixe (24) configuré pour être rendu solidaire de la poignée de guidon (12a),
   - une poignée rotative (26) coaxiale à l'axe principal (X) et mobile en rotation autour de l'axe principal (X),
   - un élément d'entraînement (28) mobile en rotation autour de l'axe principal (X) et configuré pour entraîner l'extrémité (16a) d'un câble de commande d'un dérailleur (14),
   - des moyens de couplage (100) configurés pour coupler en rotation la poignée rotative (26) et l'élément d'entraînement (28), ladite manette (20) étant **caractérisée en ce qu'**elle comprend en outre des moyens de positionnement séquentiel (200) qui coopèrent avec les moyens de couplage (100) et avec la poignée rotative (26), de sorte que lorsque la poignée rotative (26) est déplacée dans un premier sens de rotation de commande (R1) depuis une position neutre (N) vers une première position (P1) ou dans un second sens de rotation de commande (R2), opposé au premier sens de rotation de commande (R1), depuis la position neutre (N) vers une seconde position (P2), la poignée rotative (26) est ramenée automatiquement en position neutre (N) par les moyens de positionnement séquentiel (200), l'élément d'entraînement (28) étant déplacé d'un angle prédéterminée (β) dans un premier sens de rotation d'entraînement (R'1) depuis une première position initiale (P') vers une première position finale (P'1) lors des déplacements de la poignée rotative (26) entre la position neutre (N) et la première position (P1), tandis que l'élément d'entraînement (28) est déplacé de l'angle prédéterminé (β) dans un second sens de rotation d'entraînement (R'2), opposé au premier sens de rotation d'entraînement (R'1), depuis une deuxième position initiale (P') vers une deuxième position finale (P'2) lors des déplacements de la poignée rotative (26) entre la position neutre (N) et la seconde position (P2).

2. Manette selon la revendication 1, dans laquelle les moyens de positionnement séquentiel (200) comprennent au moins un ressort de rappel (220a, 220b) disposé entre l'élément fixe (24) et la poignée rotative (26), ledit au moins un ressort de rappel (220a, 220b) permettant de ramener automatiquement la poignée rotative (26) en position neutre (N).

3. Manette selon la revendication 1 ou 2, dans laquelle les moyens de couplage (100) comprennent une première roue dentée (110) couplée en rotation avec la poignée rotative (26), et les moyens de positionnement séquentiel (200) comprennent au moins un premier cliquet (210) monté sur la poignée rotative (26) et engageant une dent parmi des premières dents (111) de la première roue dentée (110), le premier cliquet (210) et les premières dents (111) étant configurés pour entraîner la première roue (110) en rotation lorsque la poignée rotative (26) tourne dans le premier sens de rotation de commande (R1), tandis que le premier cliquet (210) se désengage des premières dents (111) lorsque la poignée rotative (26) tourne dans le second sens de rotation de commande (R2).

4. Manette selon la revendication 3, dans laquelle les moyens de positionnement séquentiel (200) comprennent au moins une première came (230) solidaire de l'élément fixe (24), ladite au moins une première came (230) désengageant ledit au moins un premier cliquet (210) des premières dents (111) lorsque la poignée rotative (26) est amenée de la position neutre (N) vers la seconde position (P2).

5. Manette selon l'une quelconque des revendications 1 à 4, dans laquelle les moyens de couplage (100) comprennent une deuxième roue dentée (130) couplée en rotation avec l'élément d'entraînement (28), et les moyens de positionnement séquentiel (200) comprennent un deuxième cliquet (212) monté sur l'élément fixe (24) et engageant une dent parmi des deuxièmes dents (136) de la deuxième roue dentée (130), le deuxième cliquet (212) et les deuxièmes dents (136) étant configurés pour autoriser les déplacements en rotation de la deuxième roue dentée (130) dans le premier sens de rotation d'entraînement (R'1) et pour bloquer les déplacements en rotation de la deuxième roue dentée (130) dans le second sens de rotation d'entraînement (R'2).

6. Manette selon la revendication 5, dans laquelle les moyens de positionnement séquentiel (200) comprennent une deuxième came (232) solidaire de la poignée rotative (26), ladite deuxième came (232) désengageant le deuxième cliquet (212) des deuxièmes dents (136) lorsque la poignée rotative (26) est amenée de la position neutre (N) vers la seconde position (P2).

7. Manette selon l'une quelconque des revendications 1 à 6, dans laquelle les moyens de couplage (100) comprennent une deuxième roue dentée (130) couplée en rotation avec l'élément d'entraînement (28), et les moyens de positionnement séquentiel (200) comprennent un troisième cliquet (214) monté sur l'élément fixe (24), ledit troisième cliquet (214) étant configuré pour engager une dent parmi des troisièmes dents (138) de la deuxième roue dentée (130) lorsque la poignée rotative (26) est dans la seconde position (P2), tandis que le troisième cliquet (214) est désengagé des troisièmes dents (138) lorsque la poignée rotative (26) est dans la position neutre (N) ou dans la première position (P1).

8. Manette selon la revendication 7, dans laquelle les moyens de positionnement séquentiel (200) comprennent une troisième came (234) solidaire de la poignée rotative (26), ladite troisième came (234) engageant le troisième cliquet (214) avec une dent parmi les troisièmes dents (138) lorsque la poignée rotative (26) est amenée de la position neutre (N) vers la seconde position (P2).

9. Manette selon les revendications 6 et 8, dans laquelle la deuxième came (232) et la troisième came (234) sont configurées pour que le troisième cliquet (214) engage une troisième dent (138) avant que le deuxième cliquet (212) ne soit désengagé des deuxièmes dents (136) lorsque la poignée rotative (26) est amenée de la position neutre (N) vers la seconde position (P2).

10. Manette selon l'une quelconque des revendications 1 à 9, dans laquelle le premier sens de rotation de commande (R1) et le premier sens de rotation d'entraînement (R'1) sont orientés dans le même sens, tandis que le second sens de rotation de commande (R2) et le second sens de rotation d'entraînement (R'2) sont orientés dans le même sens.

11. Manette selon l'une quelconque des revendications 1 à 10, dans laquelle les moyens de couplage (100) comprennent une première roue dentée (110) coaxiale à l'axe principal (X) et couplée en rotation avec la poignée rotative (26), une deuxième roue dentée (130) coaxiale à l'axe principal (X) et couplée en rotation avec l'élément d'entraînement (28), et un élément intermédiaire (120) présentant un axe de rotation parallèle à, et distinct de, l'axe principal (X) et couplant en rotation la première roue dentée (110) et la deuxième roue dentée (130), ledit élément intermédiaire (120) comprenant une troisième roue dentée (122) engrenant directement la première roue dentée (110), et une quatrième roue dentée (124) solidaire de la troisième roue dentée (122), ladite quatrième roue dentée (124) engrenant directement la deuxième roue dentée (130).

12. Manette selon l'une quelconque des revendications 1 à 11, dans laquelle le jour (22) est cylindrique et formé par un manchon cylindrique (30), la poignée rotative (26) et l'élément d'entraînement (28) étant montés en rotation autour dudit manchon cylindrique (30).

13. Manette selon les revendications 3 et 11 et l'une quelconque des revendications 1 à 12, dans laquelle la première roue dentée (110) comprend une première portion annulaire (110a) et une seconde portion annulaire (110b) adjacente à la première portion annulaire (110a), et dans laquelle les premières dents (111) sont disposées sur la périphérie de la première portion annulaire (110a) tandis que des quatrièmes dents (112) engrenant la troisième roue dentée (122) sont disposées sur la périphérie de la seconde portion annulaire (110b).

14. Manette selon les revendications 5, 7 et 11 et l'une quelconque des revendications 1 à 13, dans laquelle la deuxième roue dentée (130) présente quatre secteurs angulaires distincts, des cinquièmes dents (132) engrenant la quatrième roue dentée (124) étant disposées à la périphérie d'un premier secteur angulaire ($\alpha$1), l'élément d'entraînement (28) étant disposé à la périphérie d'un deuxième secteur angulaire ($\alpha$2), les deuxièmes dents (136) étant disposées à la périphérie d'un troisième secteur angulaire ($\alpha$3), et les troisièmes dents (138) étant disposées à la périphérie d'un quatrième secteur angulaire ($\alpha$4).

15. Manette selon l'une quelconque des revendications 1 à 14, dans laquelle les moyens de couplage (100) forment un réducteur de déplacement de sorte que la course angulaire ($\beta$2) de l'élément d'entraînement (28) est inférieure à la course angulaire ($\beta$1) de la poignée rotative (26).

**Patentansprüche**

1. Schalthebel für ein Fahrrad, der eine sich entlang einer Hauptachse (X) erstreckende Öffnung (22) aufweist, wobei der Hebel (20) dazu ausgelegt ist, an einem Lenkergriff (12a) eines Fahrrades koaxial angebracht zu werden, wobei der Hebel (20) umfasst:

- ein festes Element (24), das dazu ausgelegt ist, mit dem Lenkergriff (12a) fest verbunden zu werden,

- einen Drehgriff (26), der zu der Hauptachse (X) koaxial und um die Hauptachse (X) drehbeweglich ist,
- ein Antriebselement (28), das um die Hauptachse (X) drehbeweglich und dazu ausgelegt ist, das Ende (16a) eines Seilzugs eines Schaltwerks (14) anzutreiben,
- Kopplungsmittel (100), die für eine Drehkopplung des Drehgriffs (26) und des Antriebselements (28) ausgelegt sind,

wobei der Hebel (20) **dadurch gekennzeichnet ist, dass** er ferner Mittel zum sequentiellen Positionieren (200) umfasst, die mit den Kopplungsmitteln (100) und mit dem Drehgriff (26) zusammenwirken, so dass dann, wenn der Drehgriff (26) in eine erste Betätigungsdrehrichtung (R1) aus einer neutralen Position (N) in eine erste Position (P1) oder in eine zu der ersten Betätigungsdrehrichtung (R1) entgegengesetzte zweite Betätigungsdrehrichtung (R2) aus der neutralen Position (N) in eine zweite Position (P2) bewegt wird, der Drehgriff (26) durch die Mittel zum sequentiellen Positionieren (200) automatisch in die neutrale Position (N) zurückgeführt wird, wobei das Antriebselement (28) bei den Bewegungen des Drehgriffes (26) zwischen der neutralen Position (N) und der ersten Position (P1) in eine erste Antriebsdrehrichtung (R'1) aus einer ersten Ausgangsposition (P') in eine erste Endposition (P'1) um einen vorbestimmten Winkel (β) bewegt wird, während das Antriebselement (28) bei den Bewegungen des Drehgriffes (26) zwischen der neutralen Position (N) und der zweiten Position (P2) in eine zu der ersten Antriebsdrehrichtung (R'1) entgegengesetzte zweite Antriebsdrehrichtung (R'2) aus einer zweiten Ausgangsposition (P') in eine zweite Endposition (P'2) um den vorbestimmten Winkel (β) bewegt wird.

2. Hebel nach Anspruch 1, wobei die Mittel zum sequentiellen Positionieren (200) wenigstens eine zwischen dem festen Element (24) und dem Drehgriff (26) angeordnete Rückstellfeder (220a, 220b) umfassen, wobei die wenigstens eine Rückstellfeder (220a, 220b) ermöglicht, den Drehgriff (26) automatisch in die neutrale Position (N) zurückzuführen.

3. Hebel nach Anspruch 1 oder 2, wobei die Kopplungsmittel (100) ein erstes Zahnrad (110) umfassen, welches mit dem Drehgriff (26) drehgekoppelt ist, und die Mittel zum sequentiellen Positionieren (200) wenigstens eine erste Sperrklinke (210) umfassen, die an dem Drehgriff (26) angebracht ist und an einem Zahn aus ersten Zähnen (111) des ersten Zahnrades (110) in Eingriff gelangt, wobei die erste Sperrklinke (210) und die ersten Zähne (111) dazu ausgelegt sind, das erste Rad (110) drehanzutreiben, wenn der Drehgriff (26) sich in die erste Betätigungsdrehrichtung (R1) dreht, während die erste Sperrklinke (210) von den ersten Zähnen (111) außer Eingriff kommt, wenn der Drehgriff (26) sich in die zweite Betätigungsdrehrichtung (R2) dreht.

4. Hebel nach Anspruch 3, wobei die Mittel zum sequentiellen Positionieren (200) wenigstens einen ersten Nocken (230) umfassen, der mit dem festen Element (24) fest verbunden ist, wobei der wenigstens eine erste Nocken (230) die wenigstens eine erste Sperrklinke (210) von den ersten Zähnen (111) außer Eingriff bringt, wenn der Drehgriff (26) von der neutralen Position (N) in die zweite Position (P2) gebracht wird.

5. Hebel nach einem der Ansprüche 1 bis 4, wobei die Kopplungsmittel (100) ein zweites Zahnrad (130) umfassen, welches mit dem Antriebselement (28) drehgekoppelt ist, und die Mittel zum sequentiellen Positionieren (200) eine zweite Sperrklinke (212) umfassen, die an dem festen Element (24) angebracht ist und an einem Zahn aus zweiten Zähnen (136) des zweiten Zahnrades (130) in Eingriff gelangt, wobei die zweite Sperrklinke (212) und die zweiten Zähne (136) dazu ausgelegt sind, die Drehbewegungen des zweiten Zahnrades (130) in der ersten Antriebsdrehrichtung (R'1) zuzulassen und die Drehbewegungen des zweiten Zahnrades (130) in der zweiten Antriebsdrehrichtung (R'2) zu blockieren.

6. Hebel nach Anspruch 5, wobei die Mittel zum sequentiellen Positionieren (200) einen zweiten Nocken (232) umfassen, der mit dem Drehgriff (26) fest verbunden ist, wobei der zweite Nocken (232) die zweite Sperrklinke (212) von den zweiten Zähnen (136) außer Eingriff bringt, wenn der Drehgriff (26) von der neutralen Position (N) in die zweite Position (P2) gebracht wird.

7. Hebel nach einem der Ansprüche 1 bis 6, wobei die Kopplungsmittel (100) ein zweites Zahnrad (130) umfassen, das mit dem Antriebselement (28) drehgekoppelt ist, und die Mittel zum sequentiellen Positionieren (200) eine dritte Sperrklinke (214) umfassen, die an dem festen Element (24) angebracht ist, wobei die dritte Sperrklinke (214) dazu ausgelegt ist, an einem Zahn aus dritten Zähnen (138) des zweiten Zahnrades (130) in Eingriff zu gelangen, wenn der Drehgriff (26) sich in der zweiten Position (P2) befindet, während die dritte Sperrklinke (214) von den dritten Zähnen (138) außer Eingriff gelangt, wenn der Drehgriff (26) sich in der neutralen Position (N) oder in der ersten Position (P1) befindet.

8. Hebel nach Anspruch 7, wobei die Mittel zum sequentiellen Positionieren (200) einen dritten Nocken (234) umfassen, der mit dem Drehgriff (26) fest verbunden ist, wobei der dritte Nocken (234) die dritte Sperrklinke (214) mit einem Zahn aus den dritten Zähnen (138) in Eingriff bringt, wenn der Drehgriff (26) aus der neutralen Position (N) in die zweite Position (P2) gebracht wird.

9. Hebel nach den Ansprüchen 6 und 8, wobei der zweite Nocken (232) und der dritte Nocken (234) dazu ausgelegt sind, dass die dritte Sperrklinke (214) mit einem dritten Zahn (138) in Eingriff gelangt, bevor die zweite Sperrklinke (212) von den zweiten Zähnen (136) außer Eingriff gelangt, wenn der Drehgriff (26) von der neutralen Position (N) in die zweite Position (P2) gebracht wird.

10. Hebel nach einem der Ansprüche 1 bis 9, wobei die erste Betätigungsdrehrichtung (R1) und die erste Antriebsdrehrichtung (R'1) in die gleiche Richtung gerichtet sind, während die zweite Betätigungsdrehrichtung (R2) und die zweite Antriebsdrehrichtung (R'2) in die gleiche Richtung gerichtet sind.

11. Hebel nach einem der Ansprüche 1 bis 10, wobei die Kopplungsmittel (100) ein erstes Zahnrad (110), das zu der Hauptachse (X) koaxial und mit dem Drehgriff (26) drehgekoppelt ist, ein zweites Zahnrad (130), das zu der Hauptachse (X) koaxial und mit dem Antriebselement (28) drehgekoppelt ist, sowie ein Zwischenelement (120) umfassen, das eine zu der Hauptachse (X) parallele und von dieser getrennte Drehachse aufweist und das das erste Zahnrad (110) und das zweite Zahnrad (130) drehkoppelt, wobei das Zwischenelement (120) ein drittes Zahnrad (122), das direkt mit dem ersten Zahnrad (110) in Eingriff steht, sowie ein viertes Zahnrad (124), das mit dem dritten Zahnrad (122) fest verbunden ist, umfasst, wobei das vierte Zahnrad (124) direkt mit dem zweiten Zahnrad (130) in Eingriff steht.

12. Hebel nach einem der Ansprüche 1 bis 11, wobei die Öffnung (22) zylindrisch und durch eine zylindrische Hülse (30) gebildet ist, wobei der Drehgriff (26) und das Antriebselement (28) um die zylindrische Hülse (30) drehbar angebracht sind.

13. Hebel nach den Ansprüchen 3 und 11 sowie einem der Ansprüche 1 bis 12, wobei das erste Zahnrad (110) einen ersten ringförmigen Abschnitt (110a) und einen zu dem ersten ringförmigen Abschnitt (110a) benachbarten zweiten ringförmigen Abschnitt (110b) umfasst, und wobei die ersten Zähne (111) an dem Umfang des ersten ringförmigen Abschnitts (110a) angeordnet sind, während vierte Zähne (112), die mit dem dritten Zahnrad (122) in Eingriff stehen, an dem Umfang des zweiten ringförmigen Abschnitts (110b) angeordnet sind.

14. Hebel nach den Ansprüchen 5, 7 und 11 sowie einem der Ansprüche 1 bis 13, wobei das zweite Zahnrad (130) vier verschiedene Winkelsektoren aufweist, wobei fünfte Zähne (132), die mit dem vierten Zahnrad (124) in Eingriff stehen, an dem Umfang eines ersten Winkelsektors ($\alpha1$) angeordnet sind, wobei das Antriebselement (28) an dem Umfang eines zweiten Winkelsektors ($\alpha2$) angeordnet ist, wobei die zweiten Zähne (136) an dem Umfang eines dritten Winkelsektors ($\alpha3$) angeordnet sind und wobei die dritten Zähne (138) an dem Umfang eines vierten Winkelsektors ($\alpha4$) angeordnet sind.

15. Hebel nach einem der Ansprüche 1 bis 14, wobei die Kopplungsmittel (100) einen Bewegungsuntersetzer bilden, so dass der Winkelhub ($\beta2$) des Antriebselements (28) kleiner ist als der Winkelhub ($\beta1$) des Drehgriffs (26).

**Claims**

1. A gear shifter for a bicycle, which shifter is provided with a hole (22) extending along a main axis (X), said gear shifter (20) being configured to be mounted coaxially on a bicycle handlebar grip (12a), said gear shifter (20) comprising:

   a non-moving element (24) configured to be secured to the handlebar grip (12a) so that it is prevented from moving relative thereto;
   · a rotary handgrip (26) that is coaxial about the main axis (X) and that is mounted to move in rotation about the main axis (X);
   · a drive element (28) that is mounted to move in rotation about the main axis (X) and that is configured to drive the end (16a) of a cable for controlling a derailleur (14); and
   · coupling means (100) configured to couple the rotary handgrip (26) in rotation with the drive element (28);

   said gear shifter (20) being **characterized in that** it further comprises sequential positioning means (200) that co-operate with the coupling means (100) and with the rotary handgrip (26) so that when the rotary handgrip (26) is moved in a first control rotation direction (R1) from a neutral position (N) towards a first position (P1) or in a second control rotation direction (R2), opposite from the first control rotation direction (R1), from the neutral position (N) towards a second position (P2), the rotary handgrip (26) is brought back automatically into the neutral position (N) by the sequential positioning means (200), the drive element (28) being moved through a predetermined angle ($\beta$) in a first drive rotation direction (R'1) from a first initial position (P') to a first final position (P'1) while the rotary handgrip (26) is moving from the neutral position (N) to the first position (P1), whereas the drive element (28) is moved through the predetermined angle (β) in a second drive rotation direction (R'2), opposite from the first drive rotation direction (R'1), from a second initial position (P') to a second final position (P'2) while the rotary handgrip (26) is moving from the neutral position (N) to the second position (P2).

2. A gear shifter according to claim 1, wherein the sequential positioning means (200) comprise at least one return spring (220a, 220b) disposed between the non-moving element (24) and the rotary handgrip (26), said at least one return spring (220a, 220b) enabling the rotary handgrip (26) to be brought back automatically into the neutral position (N).

3. A gear shifter according to claim 1 or claim 2, wherein the coupling means (100) comprise a first toothed wheel (110) coupled in rotation with the rotary handgrip (26), and the sequential positioning means (200) further comprise at least one first ratchet (210) mounted on the rotary handgrip (26) and engaging a tooth from among first teeth (111) of the first toothed wheel (110), the first ratchet (210) and first teeth (111) being configured to drive the first wheel (110) in rotation while the rotary handgrip (26) is turning in the first control rotation direction (R1), whereas the first ratchet (210) disengages from the first teeth (111) while the rotary handgrip (26) is turning in the second control rotation direction (R2).

4. A gear shifter according to claim 3, wherein the sequential positioning means (200) further comprise at least one first cam (230) that is secured to the non-moving element (24), said at least one first cam (230) disengaging said at least one ratchet (210) from the first teeth (111) while the rotary handgrip (26) is being brought from the neutral position (N) towards the second position (P2).

5. A gear shifter according to any one of claims 1 to 4, wherein the coupling means (100) further comprise a second toothed wheel (130) coupled in rotation with the drive element (28), and the sequential positioning means (200) further comprise a second ratchet (212) mounted on the non-moving element (24) and engaging a tooth from among second teeth (136) of the second toothed wheel (130), the second ratchet (212) and the second teeth (136) being configured to allow the second toothed wheel (130) to move in rotation in the first drive rotation direction (R'1) and to prevent the second toothed wheel (130) from moving in rotation in the second drive rotation direction (R'2).

6. A gear shifter according to claim 5, wherein the sequential positioning means (200) further comprise a second cam (232) that is secured to the rotary handgrip (26), said second cam (232) disengaging the second ratchet (212) from the second teeth (136) while the rotary handgrip (26) is being brought from the neutral position (N) towards the second position (P2).

7. A gear shifter according to any one of claims 1 to 6, wherein the coupling means (100) further comprise a second toothed wheel (130) coupled in rotation with the drive element (28), and the sequential positioning means (200) further comprises a third ratchet (214) mounted on the non-moving element (24), said third ratchet (214) being configured to engage a tooth from among third teeth (138) of the second toothed wheel (130) when the rotary handgrip (26) is in the second position (P2), whereas the third ratchet (214) is disengaged from the third teeth (138) when the rotary handgrip (26) is in the neutral position (N) or in the first position (P1).

8. A gear shifter according to claim 7, wherein the sequential positioning means (200) further comprise a third cam (234) that is secured to the rotary handgrip (26), said third cam (234) engaging the third ratchet (214) with a tooth from among third teeth (138) while the rotary handgrip (26) is being brought from the neutral position (N) towards the second position (P2).

9. A gear shifter according to claims 6 and 8, wherein the second cam (232) and the third cam (234) are configured so that the third ratchet (214) engages a third tooth (138) before the second ratchet (212) is disengaged from the second teeth (136) while the rotary handgrip (26) is being brought from the neutral position (N) towards the second position (P2).

10. A gear shifter according to any one of claims 1 to 9, wherein the first control rotation direction (R1) and the first drive rotation direction (R'1) point in the same direction, and the second control rotation direction (R2) and the second drive rotation direction (R'2) point in the same direction.

11. A gear shifter according to any one of claims 1 to 10, wherein the coupling means (100) comprise a first toothed wheel (110) having its axis coinciding with the main axis (X) and being coupled in rotation with the rotary handgrip (26), a second toothed wheel (130) having its axis coinciding with the main axis (X) and being coupled in rotation with the drive element (28), and an intermediate element (120) having an axis of rotation parallel to and distinct from the main axis (X), and coupling the first toothed wheel (110) in rotation with the second toothed wheel (130), said intermediate element (120) comprising a third toothed wheel (122) meshing directly with the first toothed wheel (110), and a fourth toothed wheel (124) secured to the third toothed wheel (122), said fourth toothed wheel (124) meshing directly with the second toothed wheel (130).

12. A gear shifter according to any one of claims 1 to 11, wherein the hole (22) is cylindrical and formed by a cylindrical sleeve (30), the rotary handgrip (26) and the drive element (28) being mounted to move in rotation about said cylindrical sleeve (30).

13. A gear shifter according to claims 3 and 11, and to any one of claims 1 to 12, wherein the first toothed wheel (110) has a first annular portion (110a) and a second annular portion (110b) adjacent to the first annular portion (110a), and wherein the first teeth (111) are disposed at the periphery of the first annular portion (110a), whereas the fourth teeth (112) that mesh with the third toothed wheel (122) are disposed at the periphery of the second annular portion (110b).

14. A gear shifter according to claims 5, 7, and 11, and to any one of claims 1 to 13, wherein the second toothed wheel (130) has four distinct angular sectors, fifth teeth (132) meshing with the fourth toothed wheel (124) being disposed at the periphery of a first angular sector ($\alpha$1), the drive element (28) being disposed at the periphery of a second angular sector ($\alpha$2), the second teeth (136) being disposed at the periphery of a third angular sector ($\alpha$3), and the third teeth (138) being disposed at the periphery of a fourth angular sector ($\alpha$4).

15. A gear shifter according to any one of claims 1 to 14, wherein the coupling means (100) form a movement reducer so that the angular stroke ($\beta$2) of the drive element (28) is less than the angular stroke ($\beta$1) of the rotary handgrip (26).

FIG.1

EP 2 631 162 B1

FIG.2

EP 2 631 162 B1

FIG.3A

FIG.3B

EP 2 631 162 B1

FIG.4

FIG.5A

FIG.5B

FIG.5C

EP 2 631 162 B1

FIG.6

FIG.7

EP 2 631 162 B1

EP 2 631 162 B1

FIG.8A

FIG.9A

FIG.8B

FIG.9B

FIG.8C

FIG.9C

FIG.8D

FIG.9D

30

FIG.10A

FIG.11A

FIG.10B

FIG.11B

FIG.10C

FIG.11C

FIG.10D

FIG.11D

EP 2 631 162 B1

FIG.10E

FIG.11E

FIG.10F

FIG.11F

32

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006053937 A